(19) Europäisches Patentamt
European Patent Office
Office européen des brevets

(11) EP 3 831 894 A1

(12) **EUROPEAN PATENT APPLICATION**
published in accordance with Art. 153(4) EPC

(43) Date of publication:
**09.06.2021 Bulletin 2021/23**

(21) Application number: **19844929.0**

(22) Date of filing: **30.07.2019**

(51) Int Cl.:
***C09D 4/00*** (2006.01) ***C09D 7/61*** (2018.01)
***C09D 7/40*** (2018.01) ***B05D 7/24*** (2006.01)
***B05D 7/14*** (2006.01) ***B05D 3/02*** (2006.01)
***C21D 8/12*** (2006.01) ***C23C 22/24*** (2006.01)

(86) International application number:
**PCT/KR2019/009482**

(87) International publication number:
**WO 2020/027545 (06.02.2020 Gazette 2020/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **30.07.2018 KR 20180088696**
**30.07.2018 KR 20180088697**
**19.12.2018 KR 20180165656**

(71) Applicant: **POSCO**
**Gyeongsangbuk-do 37859 (KR)**

(72) Inventors:
- **KWON, Min Serk**
**Pohang-si Gyeongsangbuk-do 37859 (KR)**
- **SHIM, Ho-Kyung**
**Pohang-si, Gyeongsangbuk-do 37859 (KR)**
- **KO, Hyunchul**
**Pohang-si, Gyeongsangbuk-do 37859 (KR)**
- **KIM, Byung-Chul**
**Pohang-si, Gyeongsangbuk-do 37859 (KR)**
- **CHOI, Heon-Jo**
**Pohang-si, Gyeongsangbuk-do 37859 (KR)**
- **KIM, Jung-Woo**
**Pohang-si, Gyeongsangbuk-do 37859 (KR)**
- **NO, Taeyoung**
**Pohang-si, Gyeongsangbuk-do 37859 (KR)**

(74) Representative: **Zech, Stefan Markus**
**Meissner Bolte Patentanwälte**
**Rechtsanwälte Partnerschaft mbB**
**Postfach 86 06 24**
**81633 München (DE)**

# (54) INSULATING COATING COMPOSITION FOR ELECTRICAL STEEL SHEET, AND ELECTRICAL STEEL SHEET COMPRISING INSULATING COATING

(57) An embodiment of the present invention includes: an electrical steel sheet substrate; and an insulating coating on one or both surfaces of the electrical steel sheet substrate, wherein the insulating coating includes a silane compound and a metal hydroxide.

FIG. 1

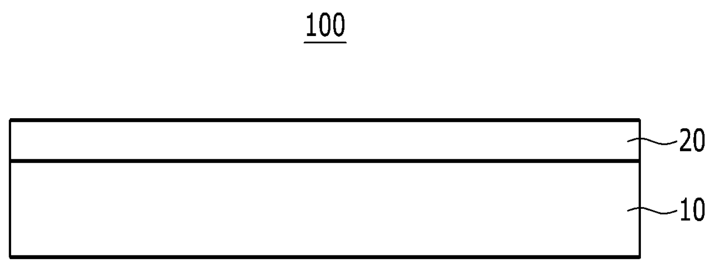


EP 3 831 894 A1

## Description

### [Technical Field]

The present invention relate to an insulating coating composition for an electrical steel sheet and an electrical steel sheet including an insulating coating. More specifically, it relates to an insulating coating composition for an electrical steel sheet having improved heat resistance and thermal conductivity during stress relief annealing, by using a silane compound having a specific chemical structure, and an electrical steel sheet including an insulating coating.

### [Background Art]

The insulating coating for the electrical steel sheet used in motors and transformers requires not only interlayer resistance but also various other characteristics. For example, convenience during processing and molding, storage, stability during use, and the like are required. In addition, since the electrical steel sheet is used for various purposes, various insulating coatings are being developed according to their uses.

For example, when the electrical steel sheet is punched, sheared, bent, etc., magnetic properties thereof are deteriorated due to residual deformation. In order to restore the deteriorated magnetic properties, stress relief annealing (SRA) at a high temperature may be performed. Accordingly, the insulating coating requires heat resistance, so that it may not be peeled off but maintains intrinsic electrical insulation during the stress relief annealing.

A conventionally-known insulating coating composition is prepared by mixing and applying chromic anhydride, magnesium oxide, an acryl-based resin, or an acryl-styrene copolymer resin to improve corrosion resistance and insulation. However, this insulating coating composition has a limit in satisfying heat resistance during the stress relief annealing, which has been recently required.

In addition, a method of improving a close contacting property during the stress relief annealing by using a metal phosphate as a main component of the insulating coating composition has been suggested. However, this method had a problem of causing whitening defects on the surface due to the phosphate with strong absorption resistance and thus generating dust during the production process and rather deteriorating the heat resistance where the whitening defects occur.

### [Disclosure]

An insulating coating composition for an electrical steel sheet and an electrical steel sheet including an insulating coating are provided. More specifically, an insulating coating composition for an electrical steel sheet having improved heat resistance and thermal conductivity during stress relief annealing by using a silane compound including a specific chemical structure, and an electrical steel sheet including an insulating coating, are provided.

An electrical steel sheet according to an embodiment of the present invention includes an electrical steel sheet substrate and an insulating coating on one or both surfaces of the electrical steel sheet substrate, and the insulating coating includes a silane compound represented by Chemical Formula 1 and a metal hydroxide.

[Chemical Formula 1]

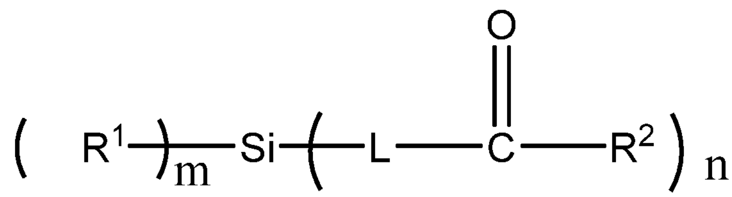

In Chemical Formula 1, $R^1$ and $R^2$ are independently hydrogen, a linear or branched alkyl group, a cycloalkyl group, an alkenyl group, an alkynyl group, an aryl group, a heteroaryl group, an alkoxy group, or an aminoalkyl group, and L is a direct bond or a divalent linking group. m is an integer of 1 to 4, and n is 4-m.

The silane compound may be represented by Chemical Formula 2.

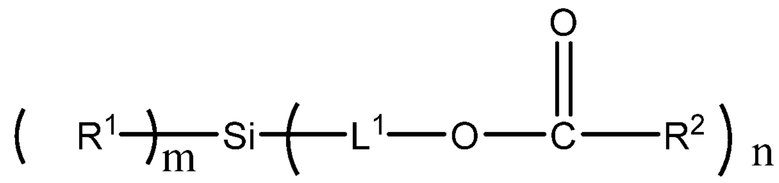

In Chemical Formula 2, $R^1$ and $R^2$ are independently hydrogen, a linear or branched alkyl group, a cycloalkyl group, an alkenyl group, an alkynyl group, an aryl group, a heteroaryl group, an alkoxy group, or an aminoalkyl group, and $L^1$ is a direct bond or a divalent linking group. m is an integer of 1 to 4, and n is 4-m.

The silane compound may include at least one of triacetoxy(methyl)silane, triacetoxy(vinyl)silane, dimethyldimethacroyloxy-1-ethoxysilane, and 3-(trimethoxysilyl) propylmethacrylate.

The metal hydroxides may include at least one of $Ni(OH)_2$, $Co(OH)_2$, $Cu(OH)_2$, $Sr(OH)_2$, $Ba(OH)_2$, $Pd(OH)_2$, $In(OH)_3$, $(CH_3CO_2)_7Cr_3(OH)_2$, $Bi(OH)_3$, and $Sn(OH)_2$.

The insulating coating may further include a metal nitride, and may include 0.1 to 40 wt% of the metal nitride, 25 to 75 wt% of the silane compound, and 0.5 to 60 wt% of the metal hydroxide.

The metal nitride may include at least one of BN, AlN, $Si_3N_4$, $Mg_3N_2$, Ca3N2, Sr3N2, Ba3N2, and Ge3N4.

The electrical steel sheet may satisfy General Formula 1.

[General Formula 1]

$$20 \leq TC \leq 200 \text{ W/mK}$$

In General Formula 1, TC indicates a thermal conductivity value measured by induction heating a 600x400 mm specimen at 230 °C and using PPMS (Physical Property Measurement System).

The electrical steel sheet substrate may include 0.01 wt% or less of C, 6.0 wt% or less of Si, 0.5 wt% or less of P, 0.005 wt% or less of S, 0.1 to 1.0 wt% of Mn, 0.40 to 2.0 wt% of Al, 0.005 wt% or less of N, 0.005 wt% or less of Ti, and 0.01 to 0.15 wt% of Sb, Sn, Ni, or a combination thereof, and a balance of Fe and inevitable impurities.

The insulating coating composition for an electrical steel sheet according to an embodiment of the present invention includes a silane compound represented by Chemical Formula 1 and a metal hydroxide.

[Chemical Formula 1]

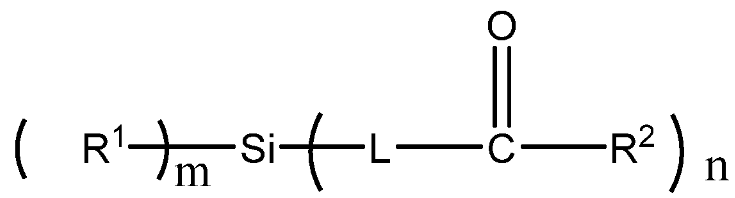

In Chemical Formula 1, $R^1$ and $R^2$ are independently hydrogen, a linear or branched alkyl group, a cycloalkyl group, an alkenyl group, an alkynyl group, an aryl group, a heteroaryl group, an alkoxy group, or an aminoalkyl group, and L is a direct bond or a divalent linking group. m is an integer of 1 to 4, and n is 4-m.

A metal nitride may be further included, and based on a solid content, 0.1 to 40 wt% of the metal nitride, 25 to 75 wt% of the silane compound, and 0.5 to 60 wt% of the metal hydroxide may be included.

The metal nitride may include at least one of BN, AlN, $Si_3N_4$, $Mg_3N_2$, Ca3N2, Sr3N2, Ba3N2, and Ge3N4.

A method of manufacturing an electrical steel sheet according to an embodiment of the present invention includes: preparing a hot-rolled sheet by hot-rolling a slab, cold-rolling the hot-rolled sheet, and then preparing a finally annealed steel sheet; and applying an insulating coating composition to the steel sheet to form an insulating coating, wherein the insulating coating composition includes a silane compound represented by Chemical Formula 1 and a metal hydroxide.

[Chemical Formula 1]

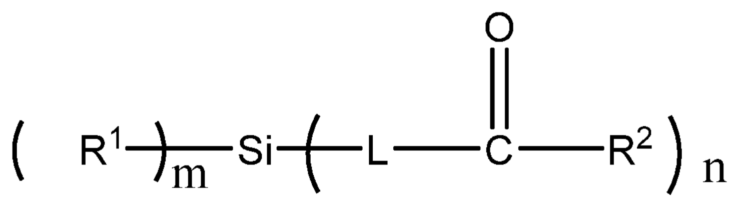

In Chemical Formula 1, $R^1$ and $R^2$ are independently hydrogen, a linear or branched alkyl group, a cycloalkyl group, an alkenyl group, an alkynyl group, an aryl group, a heteroaryl group, an alkoxy group, or an aminoalkyl group, and L is a direct bond or a divalent linking group. m is an integer of 1 to 4, and n is 4-m.

The electrical steel sheet on which the insulating coating is formed may satisfy General Formula 1.

[General Formula 1]

$$20 \leq TC \leq 200\ W/mK$$

In General Formula 1, TC indicates a thermal conductivity value measured by induction heating a 600x400 mm specimen at 230 °C and using PPMS (Physical Property Measurement System).

An insulating coating composition for an electrical steel sheet according to an embodiment of the present invention includes: a silane compound represented by Chemical Formula 1; and at least one chromic acid compound of chromic anhydride, chromate, and dichromate.

[Chemical Formula 1]

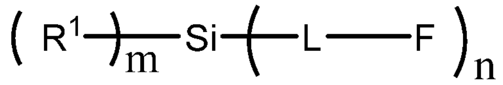

In Chemical Formula 1, $R^1$ is hydrogen, a halogen element, a linear or branched alkyl group, a cycloalkyl group, an alkenyl group, an alkynyl group, an aryl group, a heteroaryl group, an alkoxy group, or an aminoalkyl group, and L is a direct bond or a divalent linking group. m is an integer of 1 to 4, and n is 4-m.

10 to 80 parts by weight of the silane compound and 20 to 90 parts by weight of the chromic acid compound may be included based on 100 parts by weight of the total amount of the silane compound and the chromic acid compound.

In Chemical Formula 1, $R^1$ may be hydrogen, a halogen element, a linear or branched alkyl group, or an alkoxy group.

In Chemical Formula 1, L may be at least one of a direct bond, an alkylene group, and $-CF_2-$.

The silane compound may be represented by Chemical Formula 2.

[Chemical Formula 2]

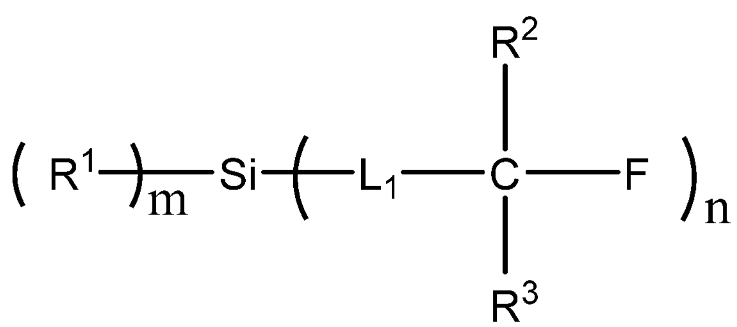

In Chemical Formula 2, $R^1$ to $R^3$ are independently hydrogen, a halogen element, a linear or branched alkyl group, a cycloalkyl group, an alkenyl group, an alkynyl group, an aryl group, a heteroaryl group, an alkoxy group, or an aminoalkyl group, and $L_1$ is a direct bond or a divalent linking group. m is an integer of 1 to 4, and n is 4-m.

In Chemical Formula 2, $R^2$ and $R^3$ may independently be hydrogen or a halogen element.

The silane compound may include at least one of triethyl(trifluoromethyl) silane, trimethoxy(trifluoropropyl) silane, dimethoxy-methyl(trifluoropropyl) silane, and perfluorooctyl-triethoxysilane.

A ceramic powder may be further included in an amount of 0.5 to 65 parts by weight based on 100 parts by weight of the total amount of the silane compound and the chromic acid compound.

The ceramic powder may include at least one of MgO, MnO, $Al_2O_3$, $SiO_2$, $TiO_2$, $ZrO_2$, $Al_6Si_2O_{13}$, $Al_2O_3 \cdot TiO_2$, $Y_2O_3$, $9Al_2O_3 \cdot B_2O_3$, BN, CrN, $BaTiO_3$, SiC, and TiC.

The ceramic powder may have an average particle diameter of 0.05 to 20 μm.

At least one polymer resin of an acrylic resin, a styrene resin, a vinyl acetate resin, a polyester resin, a urethane resin, a polyethylene resin, a polypropylene resin, a polyamide resin, a polycarbonate resin, a phenolic resin, an alkyd resin, and an epoxy resin may be further included in an amount of 0.5 to 30 parts by weight based on 100 parts by weight of the total amount of silane compound and the chromic acid compound.

At least one of ethylene glycol, propylene glycol, glycerin, and butyl carbitol may be further included in an amount of 1 to 15 parts by weight based on 100 parts by weight of the silane compound and the chromic acid compound.

An electrical steel sheet according to an embodiment of the present invention includes an electrical steel sheet substrate and an insulating coating on one or both surfaces of the electrical steel sheet substrate.

The insulating coating includes: a silane compound represented by Chemical Formula 1; and at least one chromic acid compound of chromic anhydride, chromate, and dichromate.

[Chemical Formula 1]

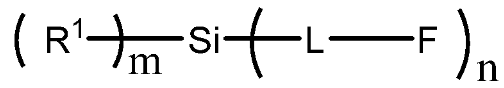

In Chemical Formula 1, $R^1$ is hydrogen, a halogen element, a linear or branched alkyl group, a cycloalkyl group, an alkenyl group, an alkynyl group, an aryl group, a heteroaryl group, an alkoxy group, or an aminoalkyl group, and L is a direct bond or a divalent linking group. m is an integer of 1 to 4, and n is 4-m.

The insulating coating includes 0.1 to 50 wt% of Si and 0.01 to 25 wt% of F.

The insulating coating may have a thickness of .1 to 10 μm.

A method of manufacturing an electrical steel sheet according to an embodiment of the present invention includes: preparing an electrical steel sheet substrate; and forming an insulating coating by applying an insulating coating composition to one or both surfaces of an electrical steel sheet substrate.

The insulating coating composition may include: a silane compound represented by Chemical Formula 1; and at least one chromic acid compound of chromic anhydride, chromate, and dichromate.

[Chemical Formula 1]

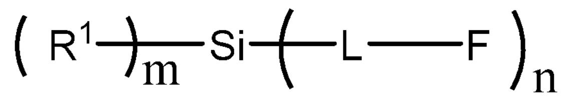

In Chemical Formula 1, $R^1$ is hydrogen, a halogen element, a linear or branched alkyl group, a cycloalkyl group, an alkenyl group, an alkynyl group, an aryl group, a heteroaryl group, an alkoxy group, or an aminoalkyl group, and L is a direct bond or a divalent linking group. m is an integer of 1 to 4, and n is 4-m.

The preparing of the electrical steel sheet substrate may include: preparing a hot-rolled sheet by hot-rolling the slab; cold-rolling the hot-rolled sheet to prepare a cold-rolled sheet; and finally annealing the cold-rolled sheet.

The forming of the insulating coating may include heat-treating the steel sheet coated with the insulating coating composition at a temperature of 100 to 680 °C.

After the forming of the insulating coating, stress relief annealing at a temperature of 700 to 1000 °C may be further included.

According to an embodiment of the present invention, an electrical steel sheet having excellent iron loss characteristics may be obtained after forming an insulating coating.

According to an embodiment of the present invention, an electrical steel sheet having an improved stacking factor may be obtained.

According to an embodiment of the present invention, an insulating coating having an improved close contacting

property and peel resistance may be obtained even after stress relief annealing (SRA).

According to an embodiment of the present invention, an electrical steel sheet having improved thermal conductivity may be manufactured, and products such as a motor manufactured using the electrical steel sheet have improved efficiency.

**[Description of the Drawings]**

FIG. 1 is a schematic view of a cross-section of an electrical steel sheet according to an embodiment of the present invention.

FIG. 2 is a flowchart of a method for manufacturing an electrical steel sheet according to an embodiment of the present invention.

FIG. 3 is a scanning electron microscopic (SEM) photograph of a cross-section of the electrical steel sheet manufactured in Example 1-2.

FIG. 4 is a scanning electron microscopic (SEM) photograph of a cross-section of the electrical steel sheet manufactured in Comparative Example 1-2.

FIG. 5 is an FT-IR-RAS analysis result of the electrical steel sheet coating prepared in Example 1-2.

FIG. 6 is a scanning electron microscopic (SEM) photograph of a cross-section of an electrical steel sheet manufactured in Example 2-2.

FIG. 7 is a scanning electron microscopic (SEM) photograph of the surface of the electrical steel sheet manufactured in Comparative Example 2-3.

**[Mode for Invention]**

Although terms such as first, second, and third are used for describing various parts, various components, various areas, and/or various sections, the present invention is not limited thereto. Such terms are used only to distinguish any part, any component, any area, any layer, or any section from other parts, other components, other areas, other layers, or other sections. Therefore, a first portion, component, region, layer, or section to be described below may be referred to as a second portion, component, region, layer, or section without departing from the scope of the present invention.

Terminologies used herein are merely used to describe a specific embodiment, and are not intended to limit the present invention. A singular form used herein includes a plural form as long as phrases do not express a clearly opposite meaning. The term "comprise" used in the specification specifies specific characteristics, a specific area, a specific essence, a specific step, a specific operation, a specific element, and/or a specific ingredient, and does not exclude existence or addition of other characteristics, other areas, other essences, other steps, other operations, other elements, and/or other ingredients.

When it is mentioned that a first component is located "above" or "on" a second component, the first component may be located directly "above" or "on" the second component or a third component may be interposed therebetween. In contrast, when it is mentioned that a first component is located "directly above" a second component, a third component is not interposed therebetween.

Although not otherwise defined, all terms used herein, including technical terms and scientific terms, have the same meanings as those generally understood by those skilled in the art to which the present invention pertains. Terms defined in a generally used dictionary are interpreted as having meanings according with related technical documents and currently disclosed contents, and are not interpreted as ideal having meanings or very formal meanings unless otherwise defined.

In the description of a group (atomic group) in the present specification, the notation that does not describe "substituted or unsubstituted" includes not only having no substituents but also having a substituent. For example, the "alkyl group" includes not only an alkyl group not having a substituent (unsubstituted alkyl group), but also an alkyl group having a substituent (substituted alkyl group).

In the present specification when a definition is not otherwise provided, "substituted" refers to replacement of at least one hydrogen of a compound by a C1 to C30 alkyl group; a C2 to C30 alkenyl group; a C2 to C30 alkynyl group; a C1 to C10 alkylsilyl group; a C3 to C30 cycloalkyl group; a C6 to C30 aryl group; a C1 to C30 heteroaryl group; a C1 to C10 alkoxy group; a silane group; an alkylsilane group; an alkoxysilane group; an amine group; an alkylamine group; an arylamine group; an ethyleneoxyl group; or a halogen.

In the present specification, when a definition is not otherwise provided, "hetero" means an atom selected from N, O, S, and P unless otherwise defined.

In the present specification, when a definition is not otherwise provided, the term "alkyl group" refers to "a

saturated alkyl group" without any alkenyl group or alkynyl; or "an unsaturated alkyl group" including at least one alkenyl group or alkynyl group. The "alkenyl group" refers to a substituent having at least one carbon-carbon double bond of at least two carbons, and the "alkyne group" may refer to a substituent having at least one carbon-carbon triple bond of at least two carbons. The alkyl group may be branched, linear, or cyclic.

The alkyl group may be a C1 to C20 alkyl group, for example, a C1 to C6 lower alkyl group, a C7 to C10 medium-sized alkyl group, or a C11 to C20 higher alkyl group.

For example, a C1 to C4 alkyl group may have 1 to 4 carbon atoms in an alkyl chain, and may be selected from methyl, ethyl, propyl, iso-propyl, n-butyl, iso-butyl, sec-butyl, and t-butyl.

Examples of the alkyl group may be a methyl group, an ethyl group, a propyl group, an isopropyl group, a butyl group, an isobutyl group, a t-butyl group, a pentyl group, a hexyl group, an ethenyl group, a propenyl group, a butenyl group, a cyclopropyl group, a cyclobutyl group, a cyclopentyl group, a cyclohexyl group, and the like.

The "aromatic group" refers to a cyclic substituent including all elements having a p-orbital which form conjugation. Examples of the aromatic group may include aryl group and a heteroaryl group.

The "aryl group" refers to a monocyclic or fused ring (i.e., a plurality of rings sharing adjacent pairs of carbon atoms).

The "heteroaryl group" refers to aryl group including 1 to 3 heteroatoms selected from N, O, S, and P. When the heteroaryl group is a fused ring, each ring may include 1 to 3 heteroatoms.

In the present specification, when a definition is not otherwise provided, an alkyl group, a cycloalkyl group, an alkenyl group, an alkynyl group, an aryl group, a heteroaryl group, an alkoxy group, or an aminoalkyl group refers to a substituted or unsubstituted alkyl group, a cycloalkyl group, an alkenyl group, an alkynyl group, an aryl group, a heteroaryl group, an alkoxy group, or an aminoalkyl group.

In the present specification, when a definition is not otherwise provided, a divalent linking group refers to at least one divalent linking group selected from an alkylene group, an alkenylene group, an arylene group, -NR'-, -O-, $-SO_2-$, - CO-, and $-CF_2-$. R' is an alkyl group.

Hereinafter, embodiments of the present invention are described in detail so that those of ordinary skill in the art can easily implement the present invention. As those skilled in the art would realize, the described embodiments may be modified in various different ways, all without departing from the spirit or scope of the present invention.

## Insulating Coating Composition for Electrical Steel Sheet

The insulating coating composition for an electrical steel sheet according to an embodiment of the present invention includes a silane compound represented by Chemical Formula 1 and a metal hydroxide.

[Chemical Formula 1]

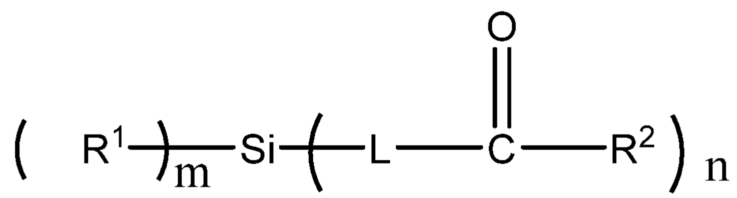

In Chemical Formula 1, $R^1$ and $R^2$ are independently hydrogen, a linear or branched alkyl group, a cycloalkyl group, an alkenyl group, an alkynyl group, an aryl group, a heteroaryl group, an alkoxy group, or an aminoalkyl group, and L is a direct bond or a divalent linking group. m is an integer of 1 to 4, and n is 4-m.

The insulating coating composition according to an embodiment of the present invention includes a silane compound having a specific chemical structure in order to significantly improve heat resistance and corrosion resistance for stress relief annealing. In addition, when the silane compound is used alone, there is a problem that the coating is peeled off during the stress relief annealing process and it is difficult to uniformly apply it to the surface of the electrical steel sheet. The metal hydroxide is also included in order to improve this.

Hereinafter, an insulating coating composition for an electrical steel sheet according to an embodiment of the present invention is described in detail for each component.

First, the insulating coating composition for an electrical steel sheet according to an embodiment of the present invention includes the silane compound represented by Chemical Formula 1 based on a solid content. Specifically, it may include 30 to 75 parts by weight based on 100 parts by weight of the total amount of the silane compound and the metal hydroxide.

The silane compound represented by Chemical Formula 1 includes a Si element and a carbonyl group in the

compound, so it has excellent heat resistance. In addition, the carbonyl group has improved reactivity with the metal hydroxide, and thus plays an important role in forming a silane compound-metal hydroxide composite and remarkably improving surface quality.

Specifically, the silane compound may be represented by Chemical Formula 2.

[Chemical Formula 2]

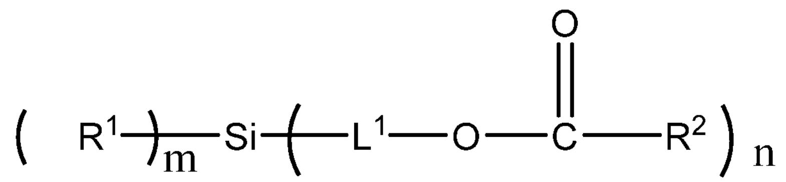

In Chemical Formula 2, $R^1$ and $R^2$ are independently hydrogen, a linear or branched alkyl group, a cycloalkyl group, an alkenyl group, an alkynyl group, an aryl group, a heteroaryl group, an alkoxy group, or an aminoalkyl group, and $L^1$ is a direct bond or a divalent linking group. m is an integer of 1 to 4, and n is 4-m.

Specifically, in Chemical Formula 1 and Chemical Formula 2, $R^1$ and $R^2$ may be hydrogen or an alkyl group. More specifically $R^1$ and $R^2$ may be a methyl group or an ethyl group.

Specifically, in Chemical Formula 1, L may be at least one divalent linking group selected from an alkylene group, -O-, and -CO-. More specifically, in Chemical Formula 1, L may be represented by -$L^1$-O-, and $L^1$ may be a direct bond or at least one divalent linking group selected from an alkylene group, -O-, and -CO-.

The silane compound may include at least one of triacetoxy(methyl)silane, triacetoxy(vinyl)silane, dimethyldimethacroyloxy-1-ethoxysilane, and 3-(trimethoxysilyl) propylmethacrylate.

If too little of the silane compound is included, heat resistance may decrease, and iron loss may be deteriorated after stress relief annealing. If too much of the silane compound is included, the metal hydroxide is relatively small, and the coating may be peeled off. Therefore, the silane compound may be included in the aforementioned range. More specifically, the silane compound may be included in an amount of 40 to 55 parts by weight based on 100 parts by weight of the total amount of the silane compound and the metal hydroxide.

The insulating coating composition for an electrical steel sheet according to an embodiment of the present invention includes the metal hydroxide. Specifically, the metal hydroxide may be included in an amount of 25 to 70 parts by weight based on 100 parts by weight of the total amount of the silane compound and the metal hydroxide.

The metal hydroxide is well dispersed in a solvent, and plays a role in changing the surface property from hydrophobic to hydrophilic so that it can be well dispersed in the solvent through a chemical reaction with the functional group of the silane compound. Since such metal hydroxide is uniformly applied to the surface of the electrical steel sheet, it greatly helps in remarkably improving heat resistance and corrosion resistance during stress relief annealing of the insulating coating.

The metal hydroxide may be used without limitation as long as it is a metal including a hydroxyl group (-OH). Specifically, the metal hydroxide may include $Ni(OH)_2$, $Co(OH)_2$, $Cu(OH)_2$, $Sr(OH)_2$, $Ba(OH)_2$, $Pd(OH)_2$, $In(OH)_3$, $(CH_3CO_2)_7Cr_3(OH)_2$, $Bi(OH)_3$, and $Sn(OH)_2$. More specifically, it may include at least one of $Co(OH)_2$ and $(CH_3CO_2)_7Cr_3(OH)_2$.

If too little metal hydroxide is included, there are problems in dispersion of the silane compound, and uniform coating. When too much metal hydroxide is included, the silane compound content is relatively small, so that improvement in heat resistance and corrosion resistance during stress relief annealing may be insufficient. More specifically, the metal hydroxide may be included in an amount of 45 to 60 parts by weight based on 100 parts by weight of the total amount of the silane compound and the metal hydroxide.

The insulating coating composition for an electrical steel sheet according to an embodiment of the present invention may further include a metal nitride in addition to the silane compound and the metal hydroxide. When an appropriate amount of metal nitride is further included, insulating characteristics and thermal conductivity characteristics of the formed insulating coating may be further improved.

When the metal nitride is further included, 0.1 to 40 wt% of the metal nitride, 25 to 75 wt% of the silane compound, and 0.5 to 60 wt% of the metal hydroxide may be included based on a solid content.

The solid content means that a solid portion excluding volatile components such as solvents in the insulating coating composition is based on 100 wt%.

If too little metal nitride is added, an effect of improving the insulating characteristics and thermal conductivity characteristics may be insufficient. If too much metal nitride is included, the amounts of the silane compound and the metal hydroxide are relatively small, and thus, improvement in heat resistance and corrosion resistance during stress

relief annealing may be insufficient. More specifically, 1 to 25 wt% of the metal nitride, 35 to 65 wt% of the silane compound, and 15 to 50 wt% of the metal hydroxide may be included based on solid content.

The metal nitride may include at least one of BN, AlN, $Si_3N_4$, $Mg_3N_2$, Ca3N2, Sr3N2, Ba3N2, and Ge3N4.

The average particle diameter of the metal nitride may be 0.05 to 20 μm. When the particle diameter of the metal nitride is appropriate, dispersion and coating are easy.

The insulating coating composition for an electrical steel sheet according to an embodiment of the present invention may further include at least one of ethylene glycol, propylene glycol, glycerine, and butyl carbitol in addition to the silane compound and the metal nitride. By further including the aforementioned additives, it is possible to form an insulating coating having improved surface gloss and very good roughness. The aforementioned additive may be further included at 1 to 15 parts by weight based on 100 parts by weight of the total amount of the silane compound and the metal hydroxide. If too little of the additive is included, the aforementioned enhancement effect may be insufficient. Even if more additive is included, there is no further improvement effect, and the dispersibility may be lowered. More specifically, the additive may be included in an amount of 3 to 10 parts by weight based on 100 parts by weight of the total amount of the silane compound and the metal hydroxide.

The insulating coating composition may further include a solvent for even dispersion and easy application of solids. Water, alcohol, etc. may be used as the solvent, and may be included at 300 to 1000 parts by weight based on 100 parts by weight of the total amount of the silane compound and the metal hydroxide. As such, the insulating coating composition may be in the form of a slurry.

The insulating coating composition for an electrical steel sheet according to an embodiment of the present invention includes: a silane compound represented by Chemical Formula 1; and at least one chromic acid compound selected from chromic anhydride, chromate, and dichromate.

[Chemical Formula 1]

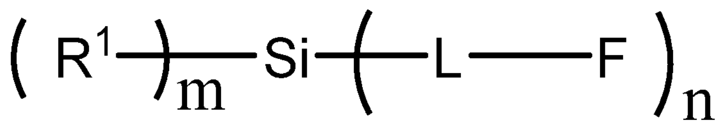

In Chemical Formula 1, $R^1$ is hydrogen, a halogen element, a linear or branched alkyl group, a cycloalkyl group, an alkenyl group, an alkynyl group, an aryl group, a heteroaryl group, an alkoxy group, or an aminoalkyl group, and L is a direct bond or a divalent linking group. m is an integer of 1 to 4, and n is 4-m.

The insulating coating composition according to an embodiment of the present invention includes the silane compound having a specific chemical structure in order to significantly improve heat resistance and corrosion resistance for stress relief annealing. In addition, when the silane compound is used alone, there is a problem that the coating is peeled off during the stress relief annealing process and it is difficult to uniformly apply it to the surface of the electrical steel sheet. The chromic acid compound is also included to improve this.

Hereinafter, an insulating coating composition for an electrical steel sheet according to an embodiment of the present invention is described in detail for each component.

First, the insulating coating composition for an electrical steel sheet according to an embodiment of the present invention includes the silane compound represented by Chemical Formula 1.

The silane compound represented by Chemical Formula 1 includes a Si element and an F element in the compound, so it has extremely excellent heat resistance. Particularly, the F element has an effect of suppressing chemical reactions in which moisture in the air penetrates into the insulating coating, so it has excellent chemical resistance, insulation, and corrosion resistance, and plays an important role in remarkably improving surface quality of the electrical steel sheet.

The silane compound may be included in an amount of 10 to 80 parts by weight based on 100 parts by weight of the total amount of the silane compound and the chromic acid compound.

If too little of the silane compound is included, the contents of Si and F elements in the insulating coating to be formed decreases, resulting in lower heat resistance, which may lead to deterioration of iron loss after stress relief annealing. It may be difficult to form a uniform insulating coating due to poor compatibility with a solvent. Therefore, the silane compound may be included in the aforementioned range. More specifically, the silane compound may be included in an amount of 40 to 70 parts by weight.

In Chemical Formula 1, $R^1$ may be hydrogen, a halogen element, a linear or branched alkyl group, or an alkoxy group. When m is 2 or more, a plurality of $R^1$'s may be the same as or different from each other.

In Chemical Formula 1, L may be at least one of a direct bond, an alkylene group, and $-CF_2-$. When n is 2 or more, a plurality of L's may be the same as or different from each other.

Specifically, the silane compound may be represented by Chemical Formula 2.

[Chemical Formula 2]

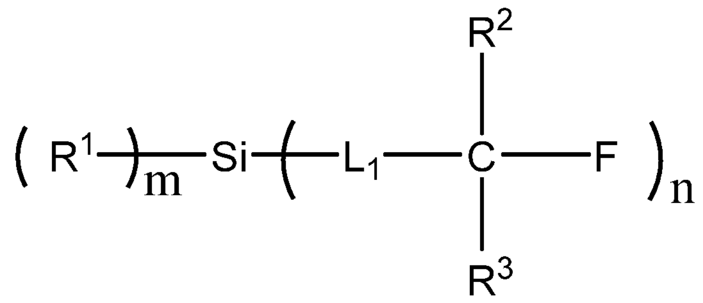

In Chemical Formula 2, $R^1$ to $R^3$ are independently hydrogen, a halogen element, a linear or branched alkyl group, a cycloalkyl group, an alkenyl group, an alkynyl group, an aryl group, a heteroaryl group, an alkoxy group, or an aminoalkyl group, and $L_1$ is a direct bond or a divalent linking group. m is an integer of 1 to 4, and n is 4-m.

Specifically, in Chemical Formula 2, $R^1$, m, and n are the same as those described in Chemical Formula 1.

$L_1$ may be a direct bond or a divalent linking group. More specifically, $L_1$ may be at least one of a direct bond, an alkylene group, and $-CF_2-$.

$R^2$ and $R^3$ may each independently be hydrogen or a halogen element.

The silane compound may include at least one of triethyl(trifluoromethyl) silane, trimethoxy(trifluoropropyl) silane, dimethoxy-methyl(trifluoropropyl) silane, and perfluorooctyl-triethoxysilane.

More specifically, the silane compound may include at least one of triethyl(trifluoromethyl) silane, trimethoxy(3,3,3-trifluoropropyl) silane, dimethoxy-methyl(3,3,3-trifluoropropyl) silane, and 1H, 1H,2H,2H-perfluorooctyl-triethoxysilane.

The insulating coating composition for an electrical steel sheet according to an embodiment of the present invention includes at least one chromic acid compound selected from chromic anhydride, chromate, and dichromate.

The chromic acid compound chemically reacts with the silane compound to improve dispersion stability, thereby forming a uniform coating. In addition, the chromic acid compound has an advantage of reducing cost when mass-produced and enabling stable operation in the insulating coating process.

As the chromate and dichromate, salts such as Na, K, Mg, Ca, Mn, Mo, Zn, and Al may be, for example, used.

The chromic acid compound may be included in an amount of 20 to 90 parts by weight based on 100 parts by weight of the total amount of the silane compound and the chromic acid compound. If too little of the chromic acid compound is included, there are problems in dispersion of the silane compound, and in uniform coating. When too much of the chromic acid compound is included, the silane compound amount is relatively small, so that improvement in heat resistance and corrosion resistance during stress relief annealing may be insufficient. More specifically, the chromic acid compound may be included in an amount of 30 to 60 parts by weight.

The insulating coating composition for an electrical steel sheet according to an embodiment of the present invention may further include a ceramic powder in addition to the silane compound and the chromic acid compound. When an appropriate amount of ceramic powder is further included, the insulating characteristics of the formed insulating coating may be further improved.

The ceramic powder may be included in an amount of 0.5 to 65 parts by weight based on 100 parts by weight of the total amount of the silane compound and the chromic acid compound. If too little ceramic powder is included, an effect of improving the insulating characteristics may be insufficient. If too much ceramic powder is included, the amounts of the silane compound and the chromic acid compound are relatively small, and thus, improvement in heat resistance and corrosion resistance during stress relief annealing may be insufficient. More specifically, the ceramic powder may be included in an amount of 5 to 30 parts by weight based on 100 parts by weight of the total amount of the silane compound and the chromic acid compound.

The ceramic powder may include at least one of MgO, MnO, $Al_2O_3$, $SiO_2$, $TiO_2$, $ZrO_2$, $Al_6Si_2O_{13}$, $Al_2O_3{\cdot}TiO_2$, $Y_2O_3$, $9Al_2O_3{\cdot}B_2O_3$, BN, CrN, $BaTiO_3$, SiC, and TiC. More specifically, the ceramic powder may include at least one of MgO, CaO, $Al_2O_3$, $SiO_2$, $TiO_2$, $ZrO_2$, $Al_2O_3{\cdot}TiO_2$, $Y_2O_3$, $9Al_2O_3{\cdot}B_2O_3$, BN, CrN, $BaTiO_3$, SiC, and TiC.

An average particle diameter of the ceramic powder may be 0.05 to 20 μm. When the particle diameter of the ceramic powder is appropriate, dispersion and coating are easy.

The insulating coating composition for an electrical steel sheet according to an embodiment of the present invention may further include 0.5 to 30 parts by weight of a polymer resin which is at least one of an acrylic resin, a

styrene resin, a vinyl acetate resin, a polyester resin, a urethane resin, a polyethylene resin, a polypropylene resin, a polyamide resin, a polycarbonate resin, a phenolic resin, an alkyd resin, and an epoxy resin based on 100 parts by weight of the total amount of the silane compound and the chromic acid compound. By adding an appropriate amount of the aforementioned polymer resin, an electrical steel sheet having excellent surface gloss and very good roughness may be manufactured.

The insulating coating composition for an electrical steel sheet according to an embodiment of the present invention may include 1 to 15 parts by weight of at least one of ethylene glycol, propylene glycol, glycerine, and butyl carbitol based on 100 parts by weight of the total amount of the silane compound and the chromic acid compound. By further including the aforementioned additives, it is possible to form an insulating coating having excellent surface gloss and very good roughness. If too little of the additive is included, the aforementioned enhancement effect may be insufficient. Even if the additive is further included, there is no further improvement effect and dispersibility may be lowered. More specifically, the additive may be included at 3 to 10 parts by weight based on 100 parts by weight of the total amount of the silane compound and the chromic acid compound.

The insulating coating composition may further include a solvent for even dispersion and easy application of solids. Water, alcohol, etc. may be used as the solvent, and may be included in an amount of 300 to 1000 parts by weight based on 100 parts by weight of the total amount of the silane compound and the chromic acid compound. As such, the insulating coating composition may be in the form of a slurry.

## Electrical Steel Sheet

The electrical steel sheet 100 according to an embodiment of the present invention includes an electrical steel sheet substrate 10 and an insulating coating 20 on one surface or both surfaces of the electrical steel sheet substrate 10. FIG. 1 shows a schematic side cross-sectional view of an electrical steel sheet according to an embodiment of the present invention. FIG. 1 shows a case in which an insulating coating 20 is formed on the upper surface of the electrical steel sheet substrate 10.

The insulating coating 20 includes a silane compound represented by Chemical Formula 1 and a metal hydroxide.

[Chemical Formula 1]

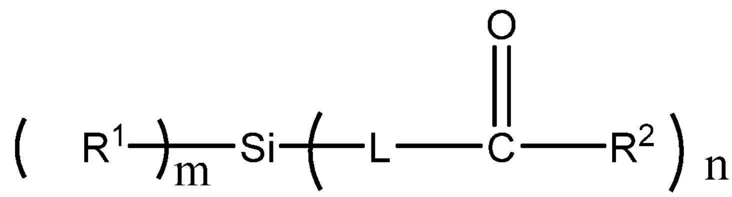

In Chemical Formula 1, $R^1$ and $R^2$ are independently hydrogen, a linear or branched alkyl group, a cycloalkyl group, an alkenyl group, an alkynyl group, an aryl group, a heteroaryl group, an alkoxy group, or an aminoalkyl group, and L is a direct bond or a divalent linking group. m is an integer of 1 to 4, and n is 4-m.

The insulating coating 20 of the electrical steel sheet 100 according to an embodiment of the present invention includes the silane compound having a specific chemical structure in order to significantly improve heat resistance and corrosion resistance for stress relief annealing and to also improve thermal conductivity. In addition, when the silane compound is used alone, there is a problem that the coating is peeled off during the stress relief annealing process and it is difficult to uniformly apply it to the surface of the electrical steel sheet. The metal hydroxide is also included to improve this.

Since the content of the components of the insulating coating 20 has been described in detail with respect to the aforementioned insulating coating composition, duplicate descriptions are omitted. In the process of forming the insulating coating 20, the chemical structure of some silane compounds may be modified, but most of the silane compounds maintain the chemical structure. In addition, in the process of forming the insulating coating 20, the silane compound and the metal hydroxide may react to form a compound. In this case, a content ratio of the silane compound and the metal hydroxide in the compound is calculated, and each weight of the silane compound and the metal hydroxide is calculated. Since volatile components such as a solvent are removed during the formation of the insulating coating 20, the components in the insulating coating 20 are substantially the same as the solid components in the insulating coating composition.

The insulating coating 20 may include 0.1 to 50 wt% of Si. In this case, Si may be Si in the silane compound, and when $Si_3N_4$ is used as the metal nitride, it may be Si in the metal nitride or Si diffused from the electrical steel sheet

substrate 10. The Si is included in an appropriate amount, so that the insulating characteristics of the insulating coating 20 may be secured.

In addition to Si, the insulating coating 20 may include an element derived from the insulating coating composition and the electrical steel sheet substrate 10, for example such as Fe, C, or O.

The thickness of the insulating coating 20 may be 0.1 to 10 μm. If the thickness of the insulating coating 20 is too thin, heat resistance may be lowered, resulting in a problem of deterioration of iron loss after stress relief annealing. If the thickness of the insulating coating 20 is too thick, a stacking factor may be lowered, resulting in a problem of deteriorating motor characteristics. Accordingly, the thickness of the insulating coating 20 may be adjusted within the aforementioned range. More specifically, the thickness of the insulating coating 20 may be 0.2 to 5 μm.

The electrical steel sheet substrate 10 may be used for a non-oriented electrical steel sheet or a grain-oriented electrical steel sheet without limitation. Specifically, a non-oriented electrical steel sheet may be used. In an embodiment of the present invention, insulating characteristics are generated by components of the insulating coating 20, and may be irrelevant to the alloy components of the electrical steel sheet. Hereinafter, as an example, alloy components of the electrical steel sheet are described.

The electrical steel sheet may include 0.01 wt% or less of C, 6.0 wt% or less of Si, 0.5 wt% or less of P, 0.005 wt% or less of S, 0.1 to 1.0 wt% of Mn, 0.40 to 2.0 wt% of Al, 0.005 wt% or less of N, 0.005 wt% or less of Ti, and 0.01 to 0.15 wt% of Sb, Sn, Ni, or a combination thereof, and a balance of Fe and inevitable impurities.

Hereinafter, each alloy component is described in detail.

Hereinafter, reasons for limiting the components of the non-oriented electrical steel sheet substrate 10 are described.

C: 0.01 wt% or less

Carbon (C) is a component that is not very helpful in improvement of the magnetic characteristics of the electrical steel sheet in the embodiment according to the present invention, so it is desirable to reduce it as much as possible. C is contained in an amount of less than 0.01 wt% as it causes magnetic aging in the final product and degrades the magnetic characteristics during use. As the C content is lower, it is more desirable for magnetic characteristics, so it is more desirable to limit it to 0.005 % by weight or less in the final product.

Si: 6.0 wt% or less

Silicon (Si) is a component that decreases eddy current loss during iron loss by increasing a specific resistance of steel, and when the content of Si is too large, brittleness increases and cold-rolling becomes difficult. Therefore, it is desirable to limit it to 6.0 wt% or less. More specifically, Si may be included in an amount of 0.1 to 4.0 wt%.

P: 0.5 wt% or less

Phosphorus (P) is added to increase a specific resistance and improve a texture to improve magnetic properties. It is desirable to limit it to 0.5 wt% or less, because if it is added excessively, the cold-rolling property deteriorates.

S: 0.005 wt% or less

Since sulfur (S) forms fine precipitates of MnS and CuS and deteriorates magnetic properties by suppressing a crystal grain growth, it is desirable to manage it to be as low as possible, and the content thereof is limited to 0.005 wt% or less.

Mn: 0.1 to 1.0 wt%

If manganese (Mn) is present in an amount of less than 0.1 wt%, fine MnS precipitates are formed to inhibit the crystal grain growth, thereby deteriorating magnetic properties. Therefore, when present in an amount of 0.1 wt% or more, coarse MnS is formed, and the S component may be prevented from being precipitated as a finer precipitate, CuS. However, since the magnetic properties are deteriorated when Mn is increased, it is added at 1.0 wt% or less.

Al: 0.40 to 2.0 wt%

Al is an effective component in reducing eddy current loss by increasing a specific resistance. When the content is less than 0.40 wt%, AlN is finely precipitated and magnetic properties are inferior, and when it exceeds 2.0 wt%, the workability is deteriorated. Therefore, it is desirable to limit it to 2.0 wt% or less.

N: 0.005 wt% or less

N is included in a small amount because it suppresses a crystal grain growth by forming fine and long AIN precipitates inside the base substrate, and is desirably limited to 0.005 wt% or less.

Ti: 0.005 wt% or less

Ti forms fine precipitates of TiN and TiC to suppress crystal grain growth, and when added in excess of 0.005 wt%, many fine precipitates are generated, deteriorating the texture and deteriorating magnetic properties.

Sb, Sn, Ni, or a combination thereof: 0.01 to 0.15 wt%

Sb, Sn, or Ni is a surface precipitation element that is concentrated on the surface layer of the steel sheet to suppress adsorption of nitrogen, and as a result, does not interfere with growth of crystal grains, thereby lowering the iron loss. If the addition content of Sb, Sn, or Ni alone or in combination is too small, the effect may be decreased. If the addition content of Sb, Sn, or Ni alone or in combination is too large, grain boundary segregation occurs severely, resulting in increased brittleness of the steel sheet, which may cause sheet fracture during rolling. When two or more types of Sb, Sn, and Ni are added in combination, the total amount may be 0.01 to 0.15 wt%.
More specifically, 0.01 to 0.05 wt% of Sb, 0.01 to 0.12 wt% of Sn, and 0.01 to 0.06 wt% of Ni may be included.
As described above, the electrical steel sheet according to an embodiment of the present invention has excellent thermal conductivity due to the formation of an insulating coating. Specifically, General Formula 1 may be satisfied.

[General Formula 1]

$$20 \leq TC \leq 200\ W/mK$$

In General Formula 1, TC indicates a thermal conductivity value measured by induction heating a 600x400 mm specimen at 230 °C and using PPMS (Physical Property Measurement System).
The insulating coating 20 of the electrical steel sheet 100 according to an embodiment of the present invention includes the silane compound having a specific chemical structure in order to significantly improve heat resistance and corrosion resistance for stress relief annealing. In addition, when the silane compound is used alone, there is a problem that the coating is peeled off during the stress relief annealing process and it is difficult to uniformly apply it to the surface of the electrical steel sheet. The chromic acid compound is also included to improve this.
Since the content of the components of the insulating coating 20 has been described in detail with respect to the aforementioned insulating coating composition, duplicate descriptions are omitted. In the process of forming the insulating coating 20, the chemical structure of some silane compounds may be modified, but most of the silane compounds maintain the chemical structure. In addition, in the process of forming the insulating coating 20, the silane compound and the chromic acid compound may react to form a compound. In this case, a content ratio of the silane compound and the chromic acid compound in the compound is calculated, and each weight of the silane compound and the chromic acid compound is calculated. Since volatile components such as a solvent are removed during the formation of the insulating coating 20, the components in the insulating coating 20 are substantially the same as the solid components in the insulating coating composition. The solid content means that a solid portion excluding volatile components such as solvents in the insulating coating composition is based on 100 wt%.
The insulating coating may include 0.1 to 50 wt% of Si and 0.01 to 25 wt% of F. In this case, Si may be Si in the silane compound, and when $SiO_2$ is used as the ceramic powder, it may be Si in the ceramic powder or Si diffused from the electrical steel sheet substrate 10. Si is included in an appropriate amount, so that the insulating characteristics of the insulating coating 20 may be secured.
In addition, F may be derived from F in the silane compound. When F is contained in an appropriate amount, the chemical resistance, insulation, and corrosion resistance of the insulating coating 20 may be improved.
In addition to Si and F, the insulating coating 20 may include an insulating coating composition such as Cr, Fe, C, O, and an element derived from the electrical steel sheet substrate 10.
The thickness of the insulating coating 20 may be 0.1 to 10 μm. If the thickness of the insulating coating 20 is too thin, heat resistance may be lowered, resulting in a problem of deterioration of iron loss after stress relief annealing. If the thickness of the insulating coating 20 is too thick, a stacking factor may be lowered, resulting in a problem of deteriorating motor characteristics. Accordingly, the thickness of the insulating coating 20 may be adjusted within the aforementioned range. More specifically, the thickness of the insulating coating 20 may be 0.2 to 5 μm.

## Method of Manufacturing Electrical Steel Sheet

FIG. 2 schematically shows a flowchart of a method for manufacturing an electrical steel sheet according to an embodiment of the present invention. The flowchart of the method for manufacturing an electrical steel sheet of FIG. 2 is only for illustrating the present invention and the present invention is not limited thereto. Therefore, the method of manufacturing the electrical steel sheet may be variously modified.

As shown in FIG. 2, the method of manufacturing the electrical steel sheet includes: preparing an electrical steel sheet substrate (S10); and forming an insulating coating by applying an insulating coating composition to one or both surfaces of an electrical steel sheet substrate (S20). In addition, the method of manufacturing the electrical steel sheet may further include other steps.

First, in step (S10), an electrical steel sheet substrate is manufactured. Since the alloy components of the electrical steel sheet have been described in detail, repeated descriptions are omitted.

The preparing of the electrical steel sheet substrate may include: hot-rolling the slab to prepare a hot-rolled sheet; cold-rolling the hot-rolled sheet to prepare a cold-rolled sheet; and finally annealing the cold-rolled sheet.

First, the slab is heated. At this time, the slab heating may be heated at 1200 °C or less.

Next, the heated slab is hot-rolled to prepare a hot-rolled sheet. The prepared hot-rolled sheet may be hot-rolled and annealed.

Next, the hot-rolled sheet is cold-rolled to prepare a cold-rolled sheet. The cold-rolling may be performed once, or two or more cold-rollings including intermediate annealing may be performed.

Next, the cold-rolled sheet is finally annealed. At this time, in the finally annealing step of the cold-rolled sheet, a rolling oil present in the cold-rolled sheet is degreased, primary annealing is performed, and secondary annealing may be performed in an atmosphere consisting of hydrogen and nitrogen. In addition, in the final annealing, a dew point temperature may be controlled to be -5 °C or less for the purpose of preventing magnetic properties from being deteriorated due to oxide formation on the surface.

Returning to the description of the method of manufacturing the electrical steel sheet again, in the next step (S20), an insulating coating composition is applied to one or both surfaces of the electrical steel sheet substrate to form an insulating coating. Since the insulating coating composition is the same as described above, duplicate descriptions are omitted.

The forming of the insulating coating may include heat-treating the steel sheet coated with the insulating coating composition at a temperature of 100 to 680 °C. When the heat-treating temperature is too low, it is not easy to remove the solvent, and it is difficult to form a good insulating coating. If the heat-treating temperature is too high, the close contacting property may be deteriorated. More specifically, it may be heat-treated at a temperature of 350 to 650 °C. The heat-treating time may be 5 to 200 seconds.

After the forming the insulating coating, it may further include stress relief annealing at a temperature of 700 to 1000 °C. In an embodiment of the present invention, even after stress relief annealing by the silane compound and the metal hydroxide in the insulating coating composition, an improved close contacting property and surface characteristics of the insulating coating may be maintained. If the temperature of the stress relief annealing is too low, the desired stress removal may not be performed smoothly. If the temperature of the stress relief annealing is too high, the magnetic properties of the electrical steel sheet may be inferior.

The stress relief annealing may be performed in a nitrogen atmosphere, and may be performed for 1 to 5 hours.

Hereinafter, the present invention will be described in more detail through examples. However, these examples are only for illustrating the present invention, and the present invention is not limited thereto.

### Experimental Example 1-1: Characteristics of Each Type of Silane Compound

### Example 1-1

A slab including 3.4 wt% of silicon (Si), 0.80 wt% of aluminum (Al), 0.17 wt% of manganese (Mn), 0.0015 wt% of titanium (Ti), 0.03 wt% of tin (Sn), 0.01 wt% of nickel (Ni), 0.003 wt% of carbon (C), 0.0013 wt% of nitrogen (N), 0.012 wt% of phosphorus (P), 0.001 wt% of sulfur (S), and Fe and other inevitable impurities as a balance amount was prepared.

This slab was heated at 1130 °C and then hot-rolled to have a thickness of 2.3 mm to manufacture a hot-rolled sheet.

The hot-rolled sheet was wound at 650 °C, cooled in the air, annealed at 1040 °C for 2 minutes, quenched in water, pickled, and then cold-rolled to have a thickness of 0.35 mm, manufacturing a cold-rolled sheet.

The cold-rolled sheet was finally annealed under an atmosphere of 20 % hydrogen and 80 % nitrogen at 1040 °C for 50 seconds by controlling a dew point temperature to manufacture an annealed steel sheet.

An insulating coating composition was prepared by mixing 60 parts by weight of triacetoxymethylsilane, 20 parts by weight of nickel hydroxide ($Ni(OH)_2$), 10 parts by weight of strontium hydroxide ($Sr(OH)_2$), 5 parts by weight of

boron nitride, and 5 parts by weight of ethylene glycol with distilled water as a slurry, and the slurry was coated with a roll on the finally-annealed steel sheet and then heat-treated at 650 °C for 30 seconds and cooled in the air. The electrical steel sheet was subjected to stress relief annealing (SRA) under a 100 % nitrogen atmosphere at 750 °C for 2 hours and cooled in the air. Herein, the insulating coating was formed to be about 0.8 μm thick.

**Examples 1-2 to 1-12**

An insulating coating composition was prepared according to the same method as Example 1-1, except that amounts and types of the silane compound, the metal hydroxide, and the metal nitride in the insulating coating composition were changed as shown in Table 1.

**Comparative Example 1-1**

An insulating coating composition was prepared according to the same method as Example 1-1, except that 100 parts by weight of triacetoxymethylsilane was included without the metal hydroxide.

**Comparative Example 1-2**

An insulating coating composition was prepared according to the same method as Example 1-1, except that 100 parts by weight of chromium hydroxide was included without the silane compound.

**Comparative Example 1-3**

An insulating coating composition was prepared according to the same method as Example 1-1, except that 60 parts by weight of the chromium hydroxide and 40 parts by weight of the boron nitride were included without the silane compound.

Characteristics of the electrical steel sheets according to the examples and the comparative examples were measured, and the results are shown in Table 2.

An iron loss (W15/50) refers to a power loss occurring when a magnetic field with a frequency of 50 Hz was magnetized to 1.5 Tesla by an AC (alternating current).

In addition, insulation characteristics were measured on the upper portion of the insulating coatings by using a Franklin measuring instrument according to the ASTM A717 international standard.

Furthermore, the close contacting property was evaluated by measuring a minimum arc diameter where the specimens had no peeling, when bent 180° while in contact with a 10 to 100 mm arc.

In addition, surface characteristics were evaluated by examining a degree to which the coatings were uniformly formed with a uniform color with the naked eye.

Furthermore, thermal conductivity was measured by induction-heating the electrical steel sheets at 230 °C and using PPMS (Physical Property Measurement System, Quantum Design Inc.).

(Table 1)

| | Silane compound (parts by weight) | Metal hydroxide (parts by weight) | Metal nitride (parts by weight) |
|---|---|---|---|
| Com parative Example 1-1 | A (100) | - | - |
| Com parative Example 1-2 | - | Cr (100) | - |
| Com parative Example 1-3 | - | Cr (60) | BN (40) |
| Com parative Example 1-4 | A (10) | Cr (90) | |
| Example 1-1 | A (60) | Ni (20), Sr (10) | BN (5) |
| Example 1-2 | B (50) | Cr (30) | AIN (10) |
| Example 1-3 | C (70) | Co (20) | AIN (7) |

(continued)

| | Silane compound (parts by weight) | Metal hydroxide (parts by weight) | Metal nitride (parts by weight) |
|---|---|---|---|
| Example 1-4 | D (33) | Cr (50) | $Si_3N_4$ (10) |
| Example 1-5 | A (30), B (25) | Cu (17), Cr (23) | $Mg_3N_2$ (4) |
| Example 1-6 | A (35), C (10), D (5) | Cr (17), Pd (3) | $Ca_3N_2$ (10) |
| Example 1-7 | B (45) | Cr (40) | $Sr_3N_2$ (7) |
| Example 1-8 | B (30) | Cr (20), Co (5), Ni (5) | $Ba_3N_2$ (35) |
| Example 1-9 | C (48) | Cr (35), Ba (5) | $Ge_3N_4$ (0.5) |
| Example 1-10 | A (10), B (10), C (10), D (15) | Cr (30), Co (0.5), Bi (0.1), Sn (0.1) | $Ge_3N_{43}$ (5) |
| Example 1-11 | B (45) | Cr (30), Co (0.5), Bi (0.1), Sn (0.1) | BN (15), AIN (5) |
| Example 1-12 | C (5), B (35) | Cr (25), In (0.5), Sn (0.2) | BN (20), AIN (5) |

**Silane compound**
A: triacetoxymethylsilane
B: triacetoxyvinylsilane
C: dimethyldimethacroyloxy-1-ethoxysilane
D: 3-(trimethoxysilyl)propylmethacrylate

**Metal hydroxide**
Cr: $(CH_3CO_2)_7Cr_3(OH)_2$
Ni: $Ni(OH)_2$
Sr: $Sr(OH)_2$
Co: $Co(OH)_2$
Pd: $Pd(OH)_2$
Ba: $Ba(OH)_2$
Bi: $Bi(OH)_3$
Sn: $Sn(OH)_2$
In: $In(OH)_3$

(Table 2)

| | Iron loss ($W_{15/50}$, W/Kg) | Insulat ion (mA) | Close contacting property (mmφ) | Surface characteristics | Thermal conductivi ty (W/mK) |
|---|---|---|---|---|---|
| Com parative Example 1-1 | 3.12 | 990 | 70 | Surface peeling is severe | 15 |
| Com parative Example 1-2 | 3.55 | 990 | 70 | Surface peeling is severe | 4 |
| Com parative Example 1-3 | 3.04 | 990 | 70 | Surface peeling is severe | 17 |
| Com parative Example 1-4 | 3.20 | 985 | 70 | Surface peeling is severe | 9 |
| Example 1-1 | 2.45 | 782 | 10 | Uniform | 78 |
| Example 1-2 | 2.34 | 777 | 10 | Uniform | 26 |
| Example 1- 3 | 2.38 | 812 | 10 | Uniform | 22 |

(continued)

| | Iron loss ($W_{15/50}$, W/Kg) | Insulation (mA) | Close contacting property (mmφ) | Surface characteristics | Thermal conductivity (W/mK) |
|---|---|---|---|---|---|
| Example 1-4 | 2.27 | 650 | 10 | Uniform | 28 |
| Example 1-5 | 2.01 | 711 | 10 | Uniform | 31 |
| Example 1-6 | 2.10 | 750 | 10 | Uniform | 26 |
| Example 1-7 | 2.37 | 688 | 10 | Uniform | 47 |
| Example 1-8 | 1.88 | 745 | 15 | Uniform | 75 |
| Example 1-9 | 2.15 | 811 | 10 | Uniform | 32 |
| Example 1-10 | 1.90 | 527 | 15 | Uniform | 31 |
| Example 1-11 | 2.11 | 450 | 15 | Uniform | 142 |
| Example 1-12 | 2.05 | 475 | 20 | Uniform | 170 |

As shown in Tables 1 and 2, the examples exhibited excellent insulating coating characteristics compared with the comparative examples. In addition, when the silane compound or the metal hydroxide was included alone, magnetic properties were deteriorated due to extreme peeling of the coatings.

FIGS. 3 and 4 are scanning electron microscopic (SEM) photographs of cross-sections of the electrical steel sheets manufactured in Example 1-2 and Comparative Example 1-2. As shown in FIG. 3, Example 1-2 maintained a beautiful insulating coating after SRA. On the contrary, as shown in FIG. 4, Comparative Example 1-2 exhibited a plurality of cracks on the surface of the insulating coatings after SRA.

FIG. 5 is an FT-IR-RAS analysis result of the electrical steel sheet coating prepared in Example 1-2. As shown in FIG. 5, in the coating, triacetoxyvinylsilane was present.

**Experimental Example 1-2: Evaluation of Stacking Factor**

**Example 1-13**

A slab including 4.2 wt% of silicon (Si), 0.80 wt% of aluminum (Al), 0.15 wt% of manganese (Mn), 0.001 wt% of titanium (Ti), 0.08 wt% of tin (Sn), 0.004 wt% of carbon (C), 0.0015 wt% of nitrogen (N), 0.015 wt% of phosphorus (P), 0.001 wt% of sulfur (S), and Fe and other inevitable impurities as a balance amount was prepared.

The slab was heated at 1150 °C and hot-rolled to have a thickness of 2.3 mm, manufacturing a hot-rolled sheet.

The hot-rolled sheet was wound at 650 °C, cooled in the air, annealed at 1040 °C for 3 minutes, rapidly quenched in water, pickled, and cold-rolled to have a thickness of 0.35 mm, manufacturing a cold-rolled sheet.

The cold-rolled sheet was finally annealed under an atmosphere of 30 % hydrogen and 70 % nitrogen at 1050 °C for 60 seconds by adjusting a dew point temperature to -40 °C to obtain an annealed steel sheet.

Subsequently, an insulating coating composition was prepared by mixing 25 parts by weight of triacetoxymethylsilane, 25 parts by weight of triacetoxyvinylsilane, 15 parts by weight of chromium hydroxide ($(CH_3CO_2)_7Cr_3(OH)_2$), 15 parts by weight of cobalt hydroxide ($Co(OH)_2$), 3 parts by weight of strontium hydroxide ($Sr(OH)_2$), 15 parts by weight of boron nitride, and 2 parts by weight of propylene glycol with distilled water into a slurry, and the slurry was coated to have a thickness, heat-treated at 650 °C for 30 seconds, and cooled in the air. The electrical steel sheet was subjected to stress relief annealing (SRA) under a 100 % nitrogen atmosphere at 820 °C for 2 hours, and then cooled in the air. The stress relief-annealed steel sheet was treated at 60 °C under humidity of 95 % for 24 hours, and results of evaluating rust generation degree on the surface are shown in Table 3.

**Comparative Example 1-5**

About 7 parts by weight of MgO and CaO were slowly added to ionized water, and then about 20 parts by weight of $CrO_3$ causing an exothermic reaction was slowly put into the solution (MgO, CaO + ionized water) and stirred and blended until it became a transparent brown liquid.

Subsequently, about 30 parts by weight of either of an acryl-based resin or an acryl-styrene copolymer and 6.7 parts by weight of butyl carbitol as a reducing agent were added to the solution, preparing an insulating coating composition.

The insulating coating composition was used in the same manner as in Example 1-13 to from an insulating coating.

**Comparative Example 1-6**

An insulating coating composition including 50 parts by weight of aluminum monophosphate ($Al(H_2PO_4)_3$), 50 parts by weight of zinc monophosphate ($Zn(H_2PO_4)_2$), 210 parts by weight of an epoxy resin, 1 part by weight of cobalt hydroxide, 1 part by weight of strontium hydroxide, and 0.05 parts by weight of a Ti chelating agent was used.

The insulating coating composition was used in the same manner as in Example 1-13 to from an insulating coating.

(Table 3)

| | Iron loss ($W_{15/50}$, W/Kg) | Stacking Factor (%) | Rust generation area (%) |
|---|---|---|---|
| Example 1-13 | 1.87 | 99.2 | 0.6 |
| Comparative Example 1-5 | 2.87 | 96.5 | 54.2 |
| Comparative Example 1-6 | 2.57 | 97.2 | 32.7 |

As shown in Table 3, Example 1-13 exhibited superbly excellent characteristics compared with Comparative Examples 1-5 and 1-6.

**Experimental Example 2-1: Characteristics of Each Type of Silane Compound**

**Example 2-1**

A slab including 3.4 wt% of silicon (Si), 0.80 wt% of aluminum (Al), 0.17 wt% of manganese (Mn), 0.0015 wt% of titanium (Ti), 0.03 wt% of tin (Sn), 0.01 wt% of bismuth (Bi), 0.003 wt% of carbon (C), 0.0013 wt% of nitrogen (N), 0.012 wt% of phosphorus (P), 0.001 wt% of sulfur (S), and Fe and other inevitable impurities as a balance amount was prepared.

The slab was heated at 1130 °C and then hot-rolled to have a thickness of 2.3 mm, preparing a hot-rolled sheet.

The hot-rolled sheet was wound at 650 °C, cooled in the air, annealed at 1040 °C for 2 minutes, quenched in water, pickled, and cold-rolled to have a thickness of 0.35 mm, preparing a cold-rolled sheet.

The cold-rolled sheet was finally annealed at 1040 °C for 50 seconds under an atmosphere of 20 % hydrogen and 80 % nitrogen by adjusting a dew point temperature.

An insulating coating composition was prepared by mixing 60 parts by weight of triethyl(trifluoromethyl)silane), 20 parts by weight of chromic anhydride ($CrO_3$), 10 parts by weight of magnesium oxide (MgO), and 5 parts by weight of ethylene glycol with distilled water into a slurry, and the slurry was coated on the finally-annealed steel sheet with a roll, heat-treated at 650 °C for 25 seconds, and cooled in the air. The electrical steel sheet was subjected to stress relief annealing (SRA) under a 100 % nitrogen atmosphere at 820 °C for 2 hours. The insulating coating had a thickness of about 0.8 $\mu$m.

**Examples 2-2 to 2-12**

Insulating coatings were respectively formed according to the same method as Example 2-1, except that amounts and types of the silane compound, the chromic acid compound, and the ceramic powder were changed as shown in Table 4.

**Comparative Example 2-1**

An insulating coating composition including 100 parts by weight of triethyl(trifluoromethyl)silane without the chromic acid compound was used in the same manner as in Example 2-1.

**Comparative Example 2-2**

An insulating coating composition including 100 parts by weight of chromic anhydride without the silane compound was used in the same manner as in Example 2-1.

**Comparative Example 2-3**

An insulating coating composition including 60 parts by weight of chromic anhydride and 40 parts by weight of magnesium oxide without the silane compound was used in the same manner as in Example 2-1.

Characteristics of the electrical steel sheets according to the examples and the comparative examples were evaluated, and the results are shown in Table 5.

An iron loss (W15/50) refers to a power loss occurring when a magnetic field with a frequency of 50 Hz was magnetized to 1.5 Tesla by an alternating current (AC).

In addition, insulation characteristics were evaluated on the upper portion of the insulating coating by using a Franklin measuring instrument according to the ASTM A717 international standard.

In addition, the close contacting property was evaluated by using a minimum arc diameter where the specimen was not peeled, when bent 180° in contact with a 10 to 100 mm arc.

In addition, surface characteristics were visually evaluated with the naked eye with respect to a degree at which a uniform film was formed with color uniformity.

(Table 4)

| | Silane compound (parts by weight) | Chromic acid compound (parts by weight) | Ceramic powder (parts by weight) |
|---|---|---|---|
| Comparative Example 2-1 | K1 (100) | - | - |
| Comparative Example 2-2 | - | $CrO_3$ (100) | - |
| Comparative Example 2-3 | - | $CrO_3$ (60) | MgO (40) |
| Example 2-1 | K1 (60) | $CrO_3$ (30) | MgO (5) |
| Example 2-2 | K2 (50) | $CrO_3$ (30) | MgO (10), $9Al_2O_3 \cdot B_2O_3$ (3) |
| Example 2-3 | K3 (70) | $Cr_2O_3$ (20) | MgO (7) |
| Example 2-4 | K4 (33) | $CrO_3$ (50) | CaO (10), BN (2) |
| Example 2-5 | K1 (30), K2 (25) | $K_2Cr_2O_7$ (40) | $Al_2O_3$ (4) |
| Example 2-6 | K1 (35), K3 (10), K4 (5) | $Na_2Cr_2O_7$ (20) | $SiO_2$ (10), $Y_2O_3$ (10) |
| Example 2-7 | K2 (45) | $CrO_3$ (40) | $TiO_2$ (7), CrN (3) |
| Example 2-8 | K2 (30) | $Cr_2O_3$ (30) | $ZrO_2$ (35), $BaTiO_3$ (3) |
| Example 2-9 | K3 (48) | $CrO_5$ (40) | $Al_2O_3 \cdot TiO_2$ (0.5) |
| Example 2-10 | K1 (10), K2 (10), K3 (10), K4 (15) | $CrO_3$ (35) | SiC (5), TiC (5) |
| **Silane compound**<br>K1: Triethyl(trifluoromethyl)silane<br>K2: Trimethoxy (3,3,3-trifluoropropyl)silane<br>K3: Dimethoxy-methyl (3,3,3-trifluoropropyl)silane<br>K4: 1 H,1H,2H,2H-Perfluorooctyl-triethoxysilane | | | |

(Table 5)

| | Iron loss ($W_{15/50}$, W/kg) | Insulati on (mA) | Close contacting property (mmφ) | Surface characteristics |
|---|---|---|---|---|
| Com parative Example 2-1 | 3.17 | 990 | 70 | Surface peeling is severe |
| Com parative Example 2-2 | 3.65 | 990 | 70 | Surface peeling is severe |
| Com parative Example 2-3 | 3.14 | 990 | 70 | Surface peeling is severe |
| Example 2-1 | 2.55 | 682 | 10 | Uniform |
| Example 2-2 | 2.24 | 677 | 10 | Uniform |
| Example 2-3 | 2.33 | 712 | 10 | Uniform |
| Example 2-4 | 2.27 | 550 | 15 | Uniform |
| Example 2-5 | 2.01 | 611 | 10 | Uniform |
| Example 2-6 | 2.03 | 650 | 10 | Uniform |
| Example 2-7 | 2.33 | 588 | 10 | Uniform |
| Example 2-8 | 1.89 | 645 | 15 | Uniform |
| Example 2-9 | 2.13 | 711 | 10 | Uniform |
| Example 2-10 | 1.91 | 327 | 20 | Uniform |

As shown in Tables 4 and 5, the examples exhibited excellent insulating coating characteristics compared with the comparative examples. In addition, when the silane compound or the chromic acid compound alone was included, magnetic characteristics were deteriorated due to extreme peeling of the coatings.

FIG. 6 is a scanning electron microscopic (SEM) photograph of a cross-section of an electrical steel sheet manufactured in Example 2-2.

FIG. 7 is a scanning electron microscopic (SEM) photograph of the surface of the electrical steel sheet manufactured in Comparative Example 2-3. As shown in FIG. 6, Example 2-2 maintained a beautiful insulating coating even after SRA. On the contrary, as shown in FIG. 7, Comparative Example 2-3 exhibited a plurality of cracks on the surface of the insulating coating after SRA.

**Experimental Example 2-2: Evaluation of Addition Effect of Polymer Resin Example 2-11**

A slab including 4.5 wt% of silicon (Si), 0.80 wt% of aluminum (Al), 0.15 wt% of manganese (Mn), 0.001 wt% of titanium (Ti), 0.05 wt% of tin (Sn), 0.004 wt% of carbon (C), 0.0015 wt% of nitrogen (N), 0.015 wt% of phosphorus (P), 0.001 wt% of sulfur (S), and Fe and other inevitable impurities as a balance amount was prepared.

The slab was heated at 1150 °C and hot-rolled to have a thickness of 2.3 mm, manufacturing a hot-rolled sheet.

The hot-rolled sheet was wound at 650 °C, cooled in the air, annealed at 1040 °C for 3 minutes, quenched in water, pickled, and cold-rolled to have a thickness of 0.35 mm, manufacturing a cold-rolled sheet.

The cold-rolled sheet was finally annealed at 1050 °C for 60 seconds under an atmosphere of 30 % hydrogen and 70 % nitrogen by adjusting a dew point temperature to -40 °C to manufacture an annealed steel sheet.

Subsequently, a polymer resin was added to the insulation coating composition according to Example 2-2, as shown in Table 6, to prepare a slurry, and the slurry was heat-treated at 650 °C for 30 seconds and cooled in the air. The electrical steel sheet was heat-treated through stress relief annealing (SRA) under a 100 % nitrogen atmosphere at 820 °C for 2 hours and then cooled in the air. The insulating coating was formed to have a thickness of about 0.4 μm.

The stress relief-annealed steel sheet was treated at 60 °C under humidity of 95 % for 24 hours, and then a rust generation degree on the surface was evaluated, and the results are shown in Table 6.

(Table 6)

| | Polymer resin (parts by weight) | Iron loss (W15/50, W/kg) | Surface roughness (μm) | Stacking factor (%) | Rust generation area (%) |
|---|---|---|---|---|---|
| Example 2-11 | acrylic resin (12) | 2.11 | 0.35 | 98.3 | 0.6 |
| Example 2-12 | styrene resin (15) | 2.05 | 0.25 | 98.5 | 1.5 |
| Example 2-13 | vinyl acetate resin (7) | 2.17 | 0.23 | 98.8 | 2.2 |
| Example 2-14 | polyester resin (20) | 2.35 | 0.37 | 98.2 | 7.7 |
| Example 2-15 | urethane resin (7) | 2.31 | 0.32 | 98.5 | 3.8 |
| Example 2-16 | polyethylene resin (5) | 1.99 | 0.35 | 98.4 | 9.8 |
| Example 2-17 | polypropylene resin (5) | 2.15 | 0.33 | 98.4 | 1.0 |
| Example 18 | polyamide resin (9) | 2.11 | 0.22 | 99.1 | 3.0 |
| Example 2-19 | polycarbonate resin (15) | 2.51 | 0.25 | 99.0 | 2.5 |
| Example 2-20 | phenolic resin (5) | 2.20 | 0.35 | 98.1 | 0.7 |
| Example 2-21 | alkyd resin (6) | 2.22 | 0.33 | 98.1 | 3.3 |
| Example 2-22 | epoxy resin (18) | 1.88 | 0.18 | 99.5 | 0.3 |

As shown in Table 6, changes in iron loss, surface roughness, a stacking factor, and a rust generation area depending on types and amounts of a polymer resin were confirmed.

The present invention is not limited to the embodiments, and may be implemented in various other forms. It may be understood by those skilled in the art to which the present invention pertains that the present invention may be implemented in other detailed forms without changing the technical spirit or the essential feature of the present invention. Therefore, the aforementioned embodiments should be understood to be exemplary but not limiting the present invention in any way.

**<Description of Symbols>**

100: electrical steel sheet
10: electrical steel sheet substrate
20: insulating coating

## Claims

1. An electrical steel sheet, comprising
an electrical steel sheet substrate, and
an insulating coating on one or both surfaces of the electrical steel sheet substrate,

wherein the insulating coating includes a silane compound represented by Chemical Formula 1 and a metal hydroxide:

[Chemical Formula 1]

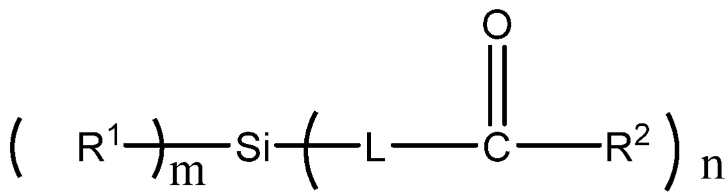

wherein, in Chemical Formula 1, $R^1$ and $R^2$ are independently hydrogen, a linear or branched alkyl group, a cycloalkyl group, an alkenyl group, an alkynyl group, an aryl group, a heteroaryl group, an alkoxy group, or an aminoalkyl group, L is a direct bond or a divalent linking group,
m is an integer of 1 to 4, and n is 4-m.

2. The electrical steel sheet of claim 1, wherein the silane compound is represented by Chemical Formula 2:

[Chemical Formula 2]

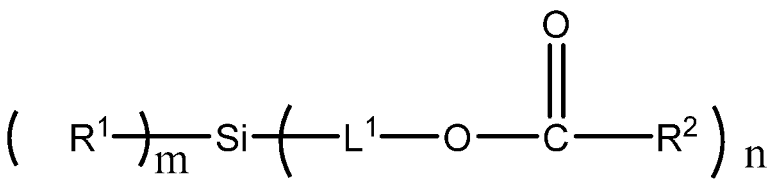

wherein, in Chemical Formula 2, $R^1$ and $R^2$ are independently hydrogen, a linear or branched alkyl group, a cycloalkyl group, an alkenyl group, an alkynyl group, an aryl group, a heteroaryl group, an alkoxy group, or an aminoalkyl group, $L^1$ is a direct bond or a divalent linking group,
m is an integer of 1 to 4, and n is 4-m.

3. The electrical steel sheet of claim 1, wherein the silane compound comprises at least one of triacetoxy(methyl)silane, triacetoxy(vinyl)silane, dimethyldimethacroyloxy-1-ethoxysilane, and 3-(trimethoxysilyl) propylmethacrylate.

4. The electrical steel sheet of claim 1, wherein the metal hydroxide comprises at least one of $Ni(OH)_2$, $Co(OH)_2$, $Cu(OH)_2$, $Sr(OH)_2$, $Ba(OH)_2$, $Pd(OH)_2$, $In(OH)_3$, $(CH_3CO_2)_7Cr_3(OH)_2$, $Bi(OH)_3$, and $Sn(OH)_2$.

5. The electrical steel sheet of claim 1, wherein
the insulating coating further comprises a metal nitride, and
0.1 to 40 wt% of a metal nitride, 25 to 75 wt% of a silane compound, and 0.5 to 60 wt% of a metal hydroxide are included.

6. The electrical steel sheet of claim 5, wherein the metal nitride comprises at least one of BN, AIN, Si3N4, Mg3N2, Ca3N2, Sr3N2, Ba3N2, and Ge3N4.

7. The electrical steel sheet of claim 1, wherein the electrical steel sheet satisfies General Formula 1:

[General Formula 1]

$$20 \leq TC \leq 200 \text{ W/mK}$$

wherein, in General Formula 1, TC indicates a thermal conductivity value measured by induction heating a 600x400 mm specimen at 230 °C and using PPMS (Physical Property Measurement System).

8. The electrical steel sheet of claim 1, wherein the electrical steel sheet substrate comprises 0.01 wt% or less of C,

6.0 wt% or less of Si, 0.5 wt% or less of P, 0.005 wt% or less of S, 0.1 to 1.0 wt% of Mn, 0.40 to 2.0 wt% of Al, 0.005 wt% or less of N, 0.005 wt% or less of Ti, and 0.01 to 0.15 wt% of Sb, Sn, Ni, or a combination thereof, and a balance of Fe and inevitable impurities.

**9.** An insulating coating composition for an electrical steel sheet, comprising a silane compound represented by Chemical Formula 1 and a metal hydroxide:

[Chemical Formula 1]

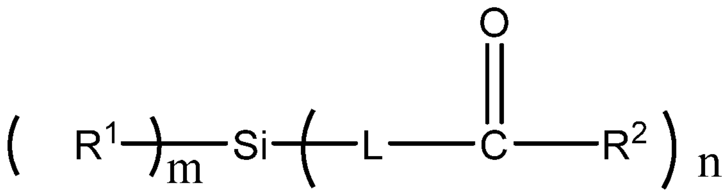

wherein, in Chemical Formula 1, $R^1$ and $R^2$ are independently hydrogen, a linear or branched alkyl group, a cycloalkyl group, an alkenyl group, an alkynyl group, an aryl group, a heteroaryl group, an alkoxy group, or an aminoalkyl group, L is a direct bond or a divalent linking group,
m is an integer of 1 to 4, and n is 4-m.

**10.** The insulating coating composition for electrical steel sheet of claim 9, wherein
a metal nitride is further included, and
based on a solid content, 0.1 to 40 wt% of the metal nitride, 25 to 75 wt% of the silane compound, and 0.5 to 60 wt% of the metal hydroxide are included.

**11.** The insulating coating composition for electrical steel sheet of claim 10, wherein the metal nitride comprises at least one of BN, AIN, $Si_3N_4$, $Mg_3N_2$, $Ca_3N_2$, Sr3N2, Ba3N2, and Ge3N4.

**12.** A method of manufacturing an electrical steel sheet, comprising:

preparing a hot-rolled sheet by hot-rolling a slab, cold-rolling the hot-rolled sheet, and then preparing a finally annealed steel sheet; and
applying an insulating coating composition to the steel sheet to form an insulating coating,
wherein the insulating coating composition includes a silane compound represented by Chemical Formula 1 and a metal hydroxide:

[Chemical Formula 1]

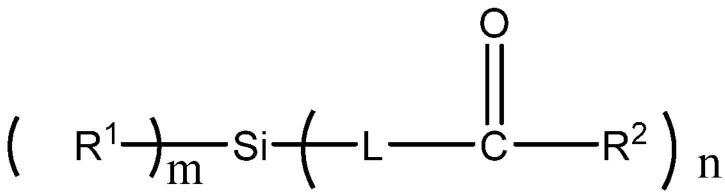

wherein, in Chemical Formula 1, $R^1$ and $R^2$ are independently hydrogen, a linear or branched alkyl group, a cycloalkyl group, an alkenyl group, an alkynyl group, an aryl group, a heteroaryl group, an alkoxy group, or an aminoalkyl group, L is a direct bond or a divalent linking group,
m is an integer of 1 to 4, and n is 4-m.

**13.** The method of claim 12, wherein the electrical steel sheet on which the insulating coating is formed satisfies General Formula 1:

[General Formula 1]

$$20 \leq TC \leq 200 \text{ W/mK}$$

wherein, in General Formula 1, TC indicates a thermal conductivity value measured by induction heating a 600x400 mm specimen at 230 °C and using PPMS (Physical Property Measurement System).

**14.** An insulating coating composition for an electrical steel sheet, comprising:
a silane compound represented by Chemical Formula 1; and at least one chromic acid compound of chromic anhydride, chromate, and dichromate:

[Chemical Formula 1]

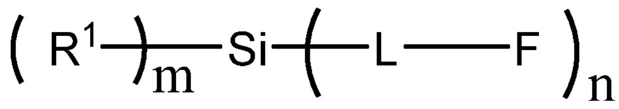

wherein, in Chemical Formula 1, $R^1$ is hydrogen, a halogen element, a linear or branched alkyl group, a cycloalkyl group, an alkenyl group, an alkynyl group, an aryl group, a heteroaryl group, an alkoxy group, or an aminoalkyl group, L is a direct bond or a divalent linking group,
m is an integer of 1 to 4, and n is 4-m.

**15.** The insulating coating composition for electrical steel sheet of claim 14, wherein 10 to 80 parts by weight of the silane compound and 20 to 90 parts by weight of the chromic acid compound are included based on 100 parts by weight of the total amount of the silane compound and the chromic acid compound.

**16.** The insulating coating composition for electrical steel sheet of claim 14, wherein in Chemical Formula 1, $R^1$ is hydrogen, a halogen element, a linear or branched alkyl group, or an alkoxy group.

**17.** The insulating coating composition for electrical steel sheet of claim 14, wherein in Chemical Formula 1, L is at least one of a direct bond, an alkylene group, and $-CF_2-$.

**18.** The insulating coating composition for electrical steel sheet of claim 14, wherein the silane compound is represented by Chemical Formula 2:

[Chemical Formula 2]

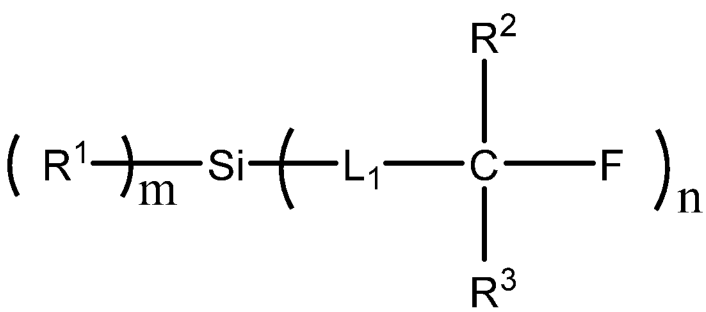

wherein, in Chemical Formula 2, $R^1$ to $R^3$ are independently hydrogen, a halogen element, a linear or branched alkyl group, a cycloalkyl group, an alkenyl group, an alkynyl group, an aryl group, a heteroaryl group, an alkoxy group, or an aminoalkyl group, $L_1$ is a direct bond or a divalent linking group,
m is an integer of 1 to 4, and n is 4-m.

**19.** The insulating coating composition for electrical steel sheet of claim 18, wherein in Chemical Formula 2, $R^2$ and $R^3$ are independently hydrogen or a halogen element.

**20.** The insulating coating composition for electrical steel sheet of claim 14, wherein the silane compound comprises at least one of triethyl(trifluoromethyl) silane, trimethoxy(trifluoropropyl) silane, dimethoxy-methyl(trifluoropropyl) silane, and perfluorooctyl-triethoxysilane.

**21.** The insulating coating composition for an electrical steel sheet of claim 14, wherein a ceramic powder is included in an amount of 0.5 to 65 parts by weight based on 100 parts by weight of the total amount of the silane compound and the chromic acid compound.

**22.** The insulating coating composition for electrical steel sheet of claim 21, wherein the ceramic powder comprises at least one of MgO, MnO, $Al_2O_3$, $SiO_2$, $TiO_2$, $ZrO_2$, $Al_6Si_2O_{13}$, $Al_2O_3{\cdot}TiO_2$, $Y_2O_3$, $9Al_2O_3{\cdot}B_2O_3$, BN, CrN, $BaTiO_3$, SiC, and TiC.

**23.** The insulating coating composition for electrical steel sheet of claim 21, wherein an average particle diameter of the ceramic powder is 0.05 to 20 $\mu$m.

**24.** The insulating coating composition for an electrical steel sheet of claim 21, which further comprises 0.5 to 30 parts by weight of a polymer resin which is at least one of an acrylic resin, a styrene resin, a vinyl acetate resin, a polyester resin, a urethane resin, a polyethylene resin, a polypropylene resin, a polyamide resin, a polycarbonate resin, a phenolic resin, an alkyd resin, and an epoxy resin based on 100 parts by weight of the total amount of the silane compound and the chromic acid compound.

**25.** The insulating coating composition for electrical steel sheet of claim 14, which comprises 1 to 15 parts by weight of at least one of ethylene glycol, propylene glycol, glycerine, and butyl carbitol based on 100 parts by weight of the total amount of the silane compound and the chromic acid compound.

**26.** An electrical steel sheet, comprising
an electrical steel sheet substrate and
an insulating coating on one or both surfaces of the electrical steel sheet substrate,
wherein the insulating coating comprises a silane compound represented by Chemical Formula 1 and at least one chromic acid compound of chromic anhydride, chromate, and dichromate:

[Chemical Formula 1]

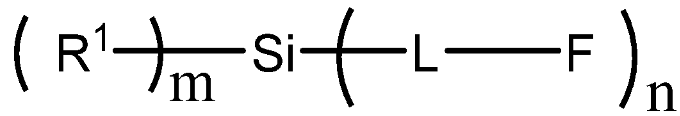

wherein, in Chemical Formula 1, $R^1$ is hydrogen, a halogen element, a linear or branched alkyl group, a cycloalkyl group, an alkenyl group, an alkynyl group, an aryl group, a heteroaryl group, an alkoxy group, or an aminoalkyl group, L is a direct bond or a divalent linking group,
m is an integer of 1 to 4, and n is 4-m.

**27.** The electrical steel sheet of claim 26, wherein the insulating coating comprises 0.1 to 50 wt% of Si and 0.01 to 25 wt% of F.

**28.** The electrical steel sheet of claim 26, wherein a thickness of the insulating coating 20 is 0.1 to 10 $\mu$m.

**29.** A method of manufacturing an electrical steel sheet, comprising:

preparing an electrical steel sheet substrate; and
forming an insulating coating by applying an insulating coating composition to one or both surfaces of an electrical steel sheet substrate,
wherein the insulating coating composition comprises a silane compound represented by Chemical Formula 1, and at least one chromic acid compound of chromic anhydride, chromate, and dichromate:

[Chemical Formula 1]

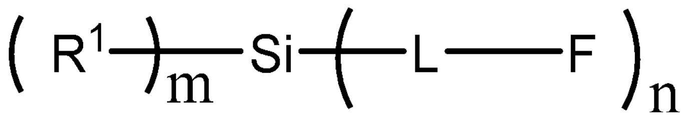

wherein, in Chemical Formula 1, $R^1$ is hydrogen, a halogen element, a linear or branched alkyl group, a cycloalkyl group, an alkenyl group, an alkynyl group, an aryl group, a heteroaryl group, an alkoxy group, or an aminoalkyl group, L is a direct bond or a divalent linking group,
m is an integer of 1 to 4, and n is 4-m.

**30.** The method of claim 29, wherein
the preparing of the electrical steel sheet substrate comprises:

preparing a hot-rolled sheet by hot-rolling the slab; cold-rolling the hot-rolled sheet to prepare a cold-rolled sheet; and
finally annealing the cold-rolled sheet.

**31.** The method of claim 29, wherein the forming of the insulating coating comprises heat-treating the steel sheet coated with the insulating coating composition at a temperature of 100 to 680 °C.

**32.** The method of claim 29, wherein,
after the forming of the insulating coating,
stress relief annealing at a temperature of 700 to 1000 °C is further included.

FIG. 1

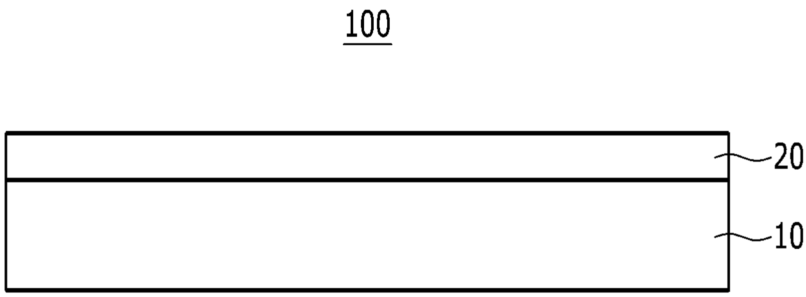

FIG. 2

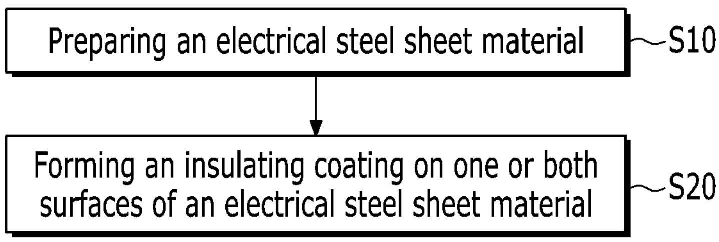
Preparing an electrical steel sheet material
S10
Forming an insulating coating on one or both surfaces of an electrical steel sheet material
S20

FIG. 3

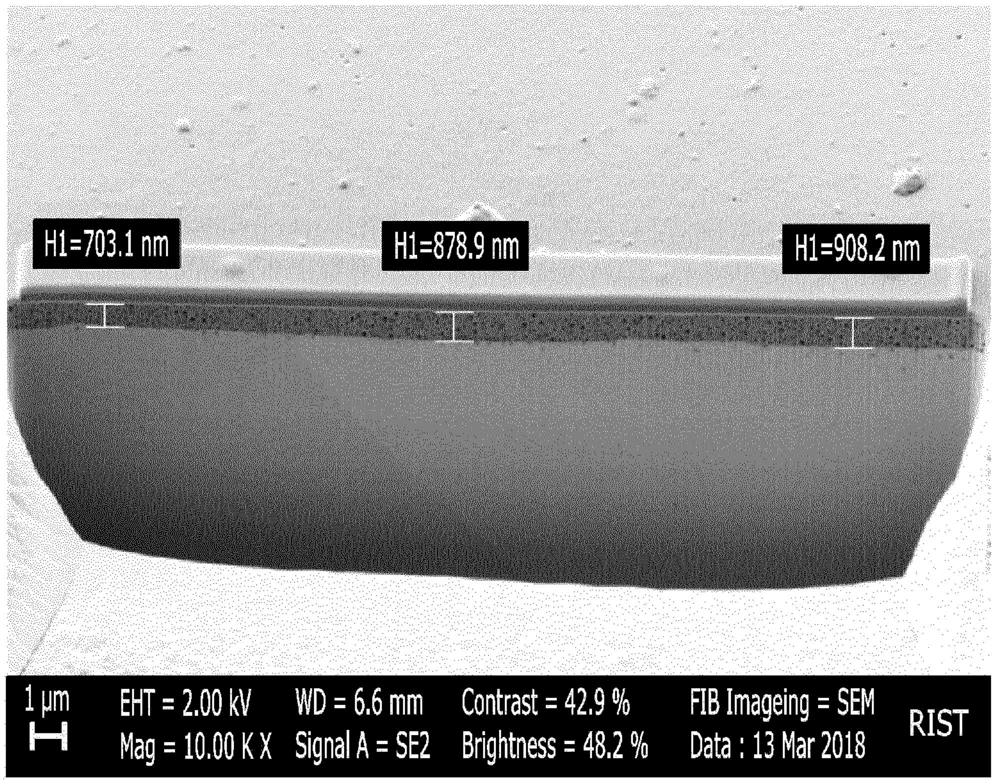
H1=703.1 nm
H1=878.9 nm
H1=908.2 nm
1 μm
EHT = 2.00 kV
Mag = 10.00 K X
WD = 6.6 mm
Signal A = SE2
Contrast = 42.9 %
Brightness = 48.2 %
FIB Imageing = SEM
Data : 13 Mar 2018
RIST

FIG. 4

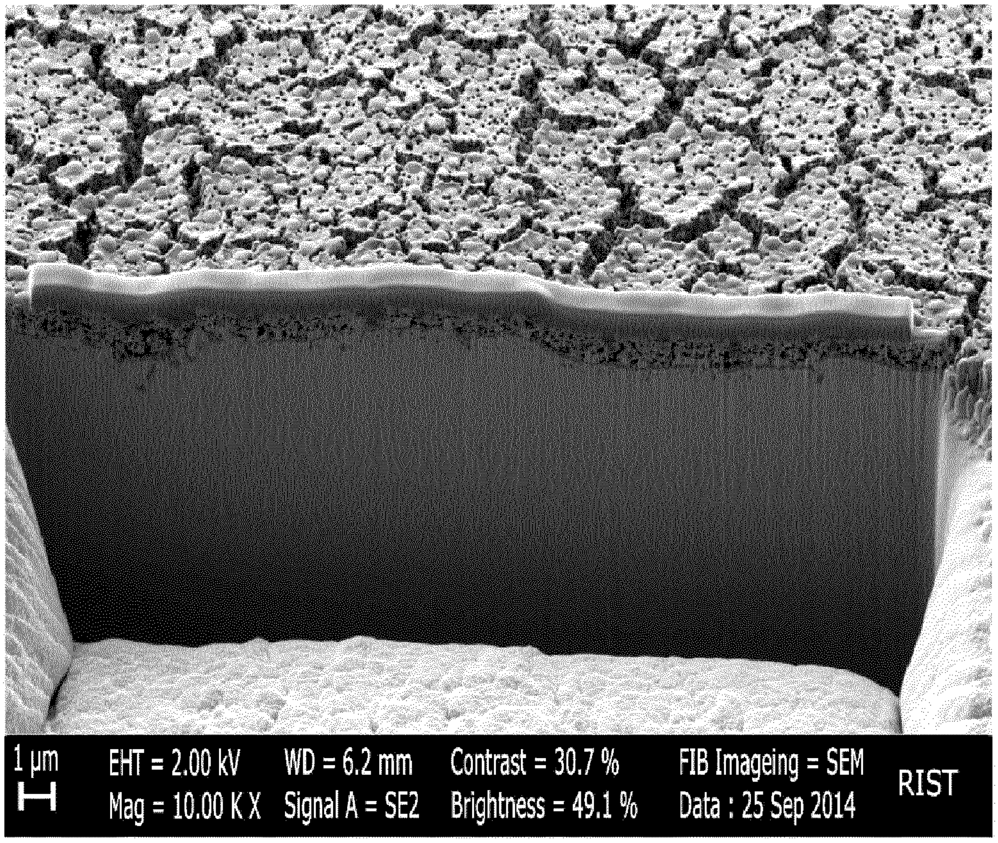
1 μm
EHT = 2.00 kV
Mag = 10.00 K X
WD = 6.2 mm
Signal A = SE2
Contrast = 30.7 %
Brightness = 49.1 %
FIB Imageing = SEM
Data : 25 Sep 2014
RIST

FIG. 5

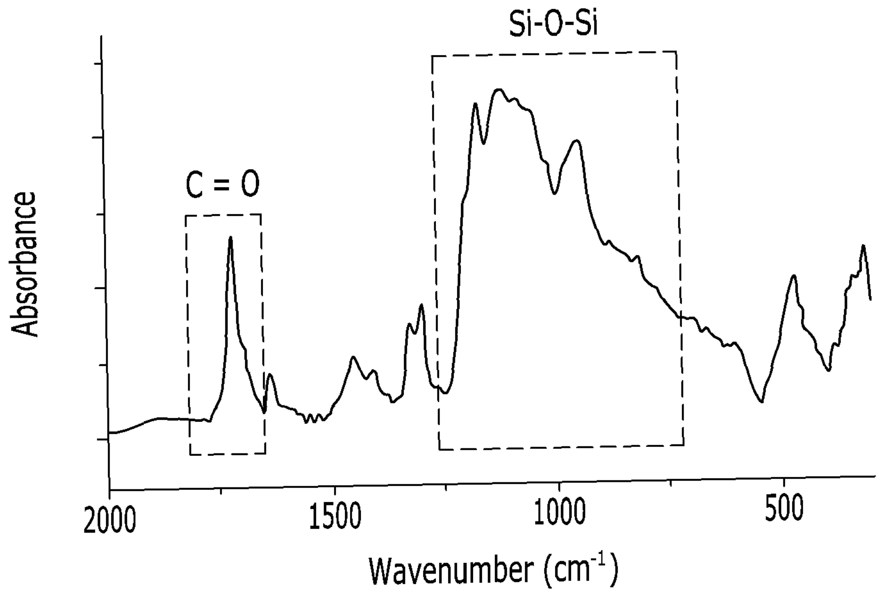

FIG. 6

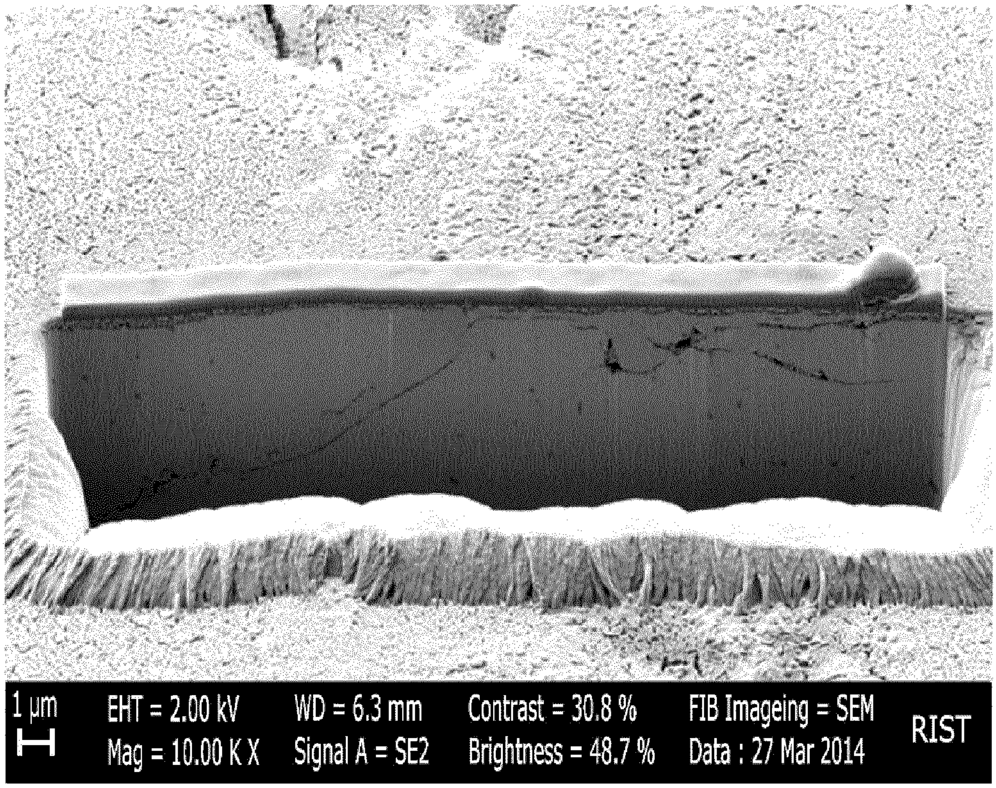
1 µm
EHT = 2.00 kV
Mag = 10.00 K X
WD = 6.3 mm
Signal A = SE2
Contrast = 30.8 %
Brightness = 48.7 %
FIB Imageing = SEM
Data : 27 Mar 2014
RIST

FIG. 7

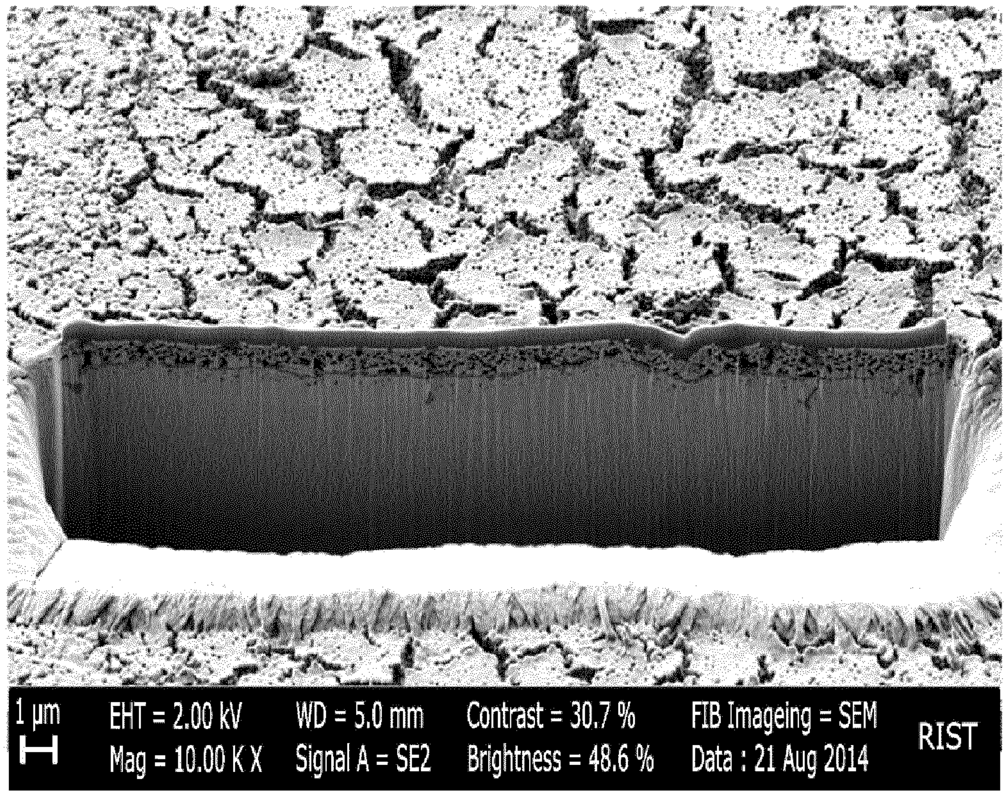
1 µm
EHT = 2.00 kV
Mag = 10.00 K X
WD = 5.0 mm
Signal A = SE2
Contrast = 30.7 %
Brightness = 48.6 %
FIB Imageing = SEM
Data : 21 Aug 2014
RIST

**INTERNATIONAL SEARCH REPORT**

International application No.
PCT/KR2019/009482

A. CLASSIFICATION OF SUBJECT MATTER
***C09D 4/00(2006.01)i, C09D 7/61(2018.01)i, C09D 7/40(2018.01)i, B05D 7/24(2006.01)i, B05D 7/14(2006.01)i, B05D 3/02(2006.01)i, C21D 8/12(2006.01)i, C23C 22/24(2006.01)i***
According to International Patent Classification (IPC) or to both national classification and IPC

B. FIELDS SEARCHED

Minimum documentation searched (classification system followed by classification symbols)
C09D 4/00; B21B 1/24; B32B 15/08; B32B 1900; C21D 9/46; C22C 38/02; C23C 22/00; C23C 26/00; C23C 28/04; C09D 7/61; C09D 7/40; B05D 7/24; B05D 7/14; B05D 3/02; C21D 8/12; C23C 22/24

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: electrical steel sheet, insulating coating, silane compound, metal hydroxide, chromic acid compound

C. DOCUMENTS CONSIDERED TO BE RELEVANT

| Category* | Citation of document, with indication, where appropriate, of the relevant passages | Relevant to claim No. |
|---|---|---|
| Y | JP 5125117 B2 (JFE STEEL CORP.) 23 January 2013<br>See claims 1, 2; and paragraphs [0011], [0013], [0020]-[0022], [0024]. | 1-32 |
| Y | US 6436557 B1 (MORIUCHI, K. et al.) 20 August 2002<br>See abstract; and column 7, lines 17-58. | 1-13 |
| Y | JP 2016-176137 A (JFE STEEL CORP.) 06 October 2016<br>See claim 1. | 5,6,10,11 |
| Y | KR 10-2015-0074860 A (POSCO) 02 July 2015<br>See claims 9, 14, 15. | 12,13,30-32 |
| Y | WO 2014-068688 A1 (HITACHI, LTD.) 08 May 2014<br>See claims 1, 2; and paragraph [0027]. | 14-32 |
| Y | KR 10-2007-0066077 A (POSCO) 27 June 2007<br>See claim 1; and example 1. | 21-25 |
| A | JP 2006-519307 A (CHEMETALL GMBH.) 24 August 2006<br>See the entire document. | 1-32 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 NOVEMBER 2019 (15.11.2019) | **15 NOVEMBER 2019 (15.11.2019)** |

| Name and mailing address of the ISA/KR | Authorized officer |
|---|---|
| Korean Intellectual Property Office<br>Government Complex Daejeon Building 4, 189, Cheongsa-ro, Seo-gu, Daejeon, 35208, Republic of Korea<br>Facsimile No. +82-42-481-8578 | Telephone No. |

Form PCT/ISA/210 (second sheet) (January 2015)

**INTERNATIONAL SEARCH REPORT**
Information on patent family members

International application No.
**PCT/KR2019/009482**

| Patent document cited in search report | Publication date | Patent family member | Publication date |
|---|---|---|---|
| JP 5125117 B2 | 23/01/2013 | JP 2008-184631 A | 14/08/2008 |
| US 6436557 B1 | 20/08/2002 | AU 3954099 A | 20/12/1999 |
| | | BR 9906472 A | 02/01/2002 |
| | | CA 2298619 A1 | 09/12/1999 |
| | | CA 2298619 C | 29/01/2008 |
| | | EP 1000981 A1 | 17/05/2000 |
| | | EP 1000981 A4 | 24/05/2006 |
| | | EP 1000981 B1 | 05/08/2009 |
| | | JP 2000-219814 A | 08/08/2000 |
| | | JP 4379947 B2 | 09/12/2009 |
| | | TW 482803 B | 11/04/2002 |
| | | WO 99-63004 A1 | 09/12/1999 |
| JP 2016-176137 A | 06/10/2016 | JP 6304208 B2 | 04/04/2018 |
| KR 10-2015-0074860 A | 02/07/2015 | KR 10-1605795 B1 | 23/03/2016 |
| WO 2014-068688 A1 | 08/05/2014 | None | |
| KR 10-2007-0066077 A | 27/06/2007 | KR 10-0733367 B1 | 29/06/2007 |
| JP 2006-519307 A | 24/08/2006 | AT 553163 T | 15/04/2012 |
| | | AT 553229 T | 15/04/2012 |
| | | AT 557069 T | 15/05/2012 |
| | | AU 2004-215240 A1 | 10/09/2004 |
| | | AU 2004-215240 B2 | 04/02/2010 |
| | | AU 2004-215240 C1 | 07/10/2010 |
| | | AU 2004-215696 A1 | 10/09/2004 |
| | | AU 2004-215696 B2 | 25/11/2010 |
| | | CA 2517057 A1 | 10/09/2004 |
| | | CA 2517057 C | 12/11/2013 |
| | | CA 2517059 A1 | 10/09/2004 |
| | | CA 2517059 C | 23/10/2012 |
| | | CN 101705484 A | 12/05/2010 |
| | | CN 1777699 A | 24/05/2006 |
| | | CN 1777699 B | 03/08/2011 |
| | | CN 1777700 A | 24/05/2006 |
| | | CN 1777700 B | 14/11/2012 |
| | | CN 1798813 A | 05/07/2006 |
| | | DE 10308237 A1 | 09/09/2004 |
| | | DE 10308237 B4 | 16/01/2014 |
| | | DE 10332744 A1 | 03/02/2005 |
| | | DE 10332744 B4 | 26/06/2014 |
| | | EP 1599551 A1 | 30/11/2005 |
| | | EP 1599551 B1 | 09/05/2012 |
| | | EP 1599615 A1 | 30/11/2005 |
| | | EP 1599615 B1 | 11/04/2012 |
| | | EP 1599616 A1 | 30/11/2005 |

Form PCT/ISA/210 (patent family annex) (January 2015)

**INTERNATIONAL SEARCH REPORT**
Information on patent family members

International application No.
**PCT/KR2019/009482**

| Patent document cited in search report | Publication date | Patent family member | Publication date |
|---|---|---|---|
| | | EP 1599616 B1 | 11/04/2012 |
| | | ES 2385982 T3 | 06/08/2012 |
| | | ES 2387805 T3 | 02/10/2012 |
| | | JP 2006-519308 A | 24/08/2006 |
| | | JP 2006-519924 A | 31/08/2006 |
| | | JP 4518419 B2 | 04/08/2010 |
| | | JP 4537377 B2 | 01/09/2010 |
| | | JP 5032111 B2 | 26/09/2012 |
| | | MX PA05009075 A | 19/10/2005 |
| | | MX PA05009076 A | 19/10/2005 |
| | | RU 2005129537 A | 10/03/2006 |
| | | RU 2357003 C2 | 27/05/2009 |
| | | US 2006-0099429 A1 | 11/05/2006 |
| | | US 2006-0127681 A1 | 15/06/2006 |
| | | US 2006-0193988 A1 | 31/08/2006 |
| | | US 2011-0039115 A1 | 17/02/2011 |
| | | US 2011-0086173 A1 | 14/04/2011 |
| | | US 2015-0361274 A1 | 17/12/2015 |
| | | US 8932679 B2 | 13/01/2015 |
| | | US 9175170 B2 | 03/11/2015 |
| | | WO 2004-076568 A1 | 10/09/2004 |
| | | WO 2004-076717 A1 | 10/09/2004 |
| | | WO 2004-076718 A1 | 10/09/2004 |

Form PCT/ISA/210 (patent family annex) (January 2015)